(19) Europäisches Patentamt
European Patent Office
Office européen des brevets

(11) EP 4 168 470 B1

(12) # EUROPÄISCHE PATENTSCHRIFT

(45) Veröffentlichungstag und Bekanntmachung des Hinweises auf die Patenterteilung:
**24.04.2024 Patentblatt 2024/17**

(21) Anmeldenummer: **21732029.0**

(22) Anmeldetag: **11.06.2021**

(51) Internationale Patentklassifikation (IPC):
***C08G 63/199*** *(2006.01)* ***C08G 63/64*** *(2006.01)*
***C08G 63/66*** *(2006.01)* ***C08G 63/672*** *(2006.01)*
***C08L 69/00*** *(2006.01)*

(52) Gemeinsame Patentklassifikation (CPC):
**C08G 63/181; C08G 63/199; C08G 63/64; C08G 63/672; C08G 64/06; C08G 64/305**

(86) Internationale Anmeldenummer:
**PCT/EP2021/065740**

(87) Internationale Veröffentlichungsnummer:
**WO 2021/254891 (23.12.2021 Gazette 2021/51)**

(54) **POLYESTERCARBONATE MIT DEFINIERTEM ANTEIL AN ESTERGRUPPEN**
POLYESTER CARBONATES HAVING A DEFINED CONTENT OF ESTER GROUPS
CARBONATE DE POLYESTER À PROPORTION DÉFINIE DANS DES GROUPES ESTER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.06.2020 EP 20181057**

(43) Veröffentlichungstag der Anmeldung:
**26.04.2023 Patentblatt 2023/17**

(73) Patentinhaber: **Covestro Deutschland AG**
**51373 Leverkusen (DE)**

(72) Erfinder:
- **MEYER, Alexander**
  **40489 Düsseldorf (DE)**
- **SCHULZ, Lukas Fabian**
  **32657 Lemgo (DE)**
- **PFINGST, Thomas**
  **47918 Tönisvorst (DE)**

(74) Vertreter: **Levpat**
**c/o Covestro AG**
**Gebäude K12**
**51365 Leverkusen (DE)**

(56) Entgegenhaltungen:
**EP-A1- 3 026 074** **CN-A- 110 183 633**
**US-A1- 2019 375 890**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 168 470 B1

## Beschreibung

Die vorliegende Erfindung betrifft Copolyestercarbonate der Strukturformel (1) mit einem definierten Anteil an Estergruppen, eine Formmasse, ein Formteil sowie ein Verfahren zur Herstellung der entsprechenden Polyestercarbonate.

Es ist bekannt, dass Polyester, Polycarbonate sowie Polyestercarbonate gute Eigenschaften bezüglich Mechanik, Wärmeformbeständigkeit und Bewitterungsbeständigkeit aufweisen. Jede Polymergruppe weist in Abhängigkeit der verwendeten Monomere bestimmte Schlüsselmerkmale auf, durch die sich derartige Materialien auszeichnen. So weisen Polycarbonate insbesondere gute mechanische Eigenschaften auf, wohingegen Polyester häufig eine bessere Chemikalienbeständigkeit zeigen. Polyestercarbonate zeigen in Abhängigkeit der gewählten Monomere Eigenschaftsprofile aus beiden genannten Gruppen.

Der Nachteil aliphatischer Polycarbonate oder Polyestercarbonate ist häufig deren geringe Glastemperatur. Deshalb ist es von Vorteil cycloaliphatische Alkohole als (Co)Monomere einzusetzen. Derartige cycloaliphatische Alkohole sind beispielsweise TCD-Alkohol (Tricyclodecandimethanol; 8-(Hydroxymethyl)-3-tricyclo[5.2.1.02,6]decanyl]methanol,), Cyclohexandiol, Cyclohexandimethanol und biobasierte Diole auf Basis von 1,4:3,6-Dianhydrohexitolen wie Isosorbid und den Isomeren Isomannid und Iosidid. Um die Glastemperatur weiter zu erhöhen, werden häufig auch cycloaliphatische Säuren wie 1,2, 1,3 oder 1,4 Cyclohexandicarbonsäuren oder entsprechende Naphthalinderivate als (Co)Monomere eingesetzt werden. Man erhält dann je nach Wahl der Reaktanden Polyester oder Polyestercarbonate. Diese Anmeldung betrifft Copolyestercarbonate auf Basis von 1,4:3,6-Dianhydrohexitolen wie Isosorbid bzw. den Isomeren, Furandicarbonsäuren sowie cycloaliphatische Alkohole die eine bestimmte Mengen an Estergruppen aufweisen, um verbesserte Eigenschaften zu erzielen. Die Erfindung betrifft ferner ein Verfahren zur Herstellung dieser Copolyestercarbonate, welches sich durch die direkte Umsetzung der Rohstoffe auszeichnet und keine in der Handhabung herausfordernde Rohstoffe wie Phosgen benötigt.

Polyester werden großtechnisch beispielsweise durch Umesterung entsprechender Ester-haltiger Monomere mit Diolen hergestellt. So wird der Polyester aus 1,4-Cylohexandimethanol und 1,4-Cyclohexandicarbonsäure ausgehend vom Dimethylester der Disäure hergestellt (Blend aus diesem Polyester und Polycarbonat: Xyrex® der DuPont).

Für die Umesterungsreaktion sind Phenylester aber deutlich reaktiver als ihre aliphatischen Analoga. In EP 3026074 A1 und in EP 3248999 A1 werden Verfahren zur Herstellung von Polyestercarbonaten mit Phenylester als Zwischenschritt beschrieben. Diese werden auf Basis von Cyclohexandicarbonsäure und Isosorbid hergestellt.

Im Zuge des wachsenden Bedürfnisses nach nachhaltigen Materialien unter Beibehaltung der gewünschten Performance, rücken bio-basierte Monomere auch für Polyestercarbonate immer mehr in den Fokus. Insbesondere die bereits oben genannten 1,4:3,6-Dianhydrohexitole sind bereits kommerziell erhältlich. Ebenso kann die Furandicarbonsäure aus 5-Hydroxymethylfurfural gewonnen werden, welches wiederum aus Fructose hergestellt wird.

Im Sinne der vorliegenden Erfindung wird unter dem Ausdruck "biobasiert" verstanden, dass die betreffende chemische Verbindung zum Anmeldezeitpunkt durch einen erneuerbaren und/oder nachwachsenden Rohstoff zugänglich, erhältlich und/oder bevorzugt ein solcher erneuerbarer und/oder nachwachsender Rohstoff ist. Unter einem erneuerbaren und/oder nachwachsenden Rohstoff wird bevorzugt ein Rohstoff verstanden, welcher durch natürliche Prozesse mit einer Geschwindigkeit regeneriert wird, die mit ihrer Abbaurate vergleichbar ist (Siehe CEN/TS 16295:2012). Der Ausdruck dient insbesondere der Abgrenzung zu Rohstoffen aus fossilen Rohstoffen, erfindungsgemäß auch als petrobasiert bezeichnet. Ob ein Rohstoff biobasiert ist oder petrobasiert, kann durch die Messung von Kohlenstoffisotopen in dem Rohstoff festgestellt werden, da die relativen Mengen des Kohlenstoffisotops C14 geringer sind in fossilen Rohstoffen. Dies kann beispielsweise gemäß der ASTM D6866-18 (2018) oder der ISO16620-1 bis -5 (2015) oder der DIN SPEC 91236 2011-07 erfolgen.

Terzopoulou et al. (Materials 2017, 10, 801) beschreiben biobasierte Polyester enthaltend Furandicarbonsäure wie z.B: Poly(2-methyl-1,3-propyl-2,5-furanoat), Poly(isosorbid-2,5-furanoat) und Poly(1,4cyclohexandimethylen-2,5-furanoat). Poly(1,4-cyclohexandimethylen-2,5-furanoat) ist ein semi-kristallines Material. Jedoch sind Polymere mit amorphen Charakter wünschenswert, da sie sich insbesondere durch gute Transparenz und gute mechanische Eigenschaften auszeichnen. Poly(2-methyl-1,3-propyl-2,5-furanoat) ist zwar amorph, weist aber mit 55 °C eine deutlich zu geringe Glastemperatur für viele technische Anwendungen auf. Poly(isosorbid-2,5-furanoat) ist ebenfalls amorph und weist eine hohe Glastemperatur auf (157 °C), ist aber ein sehr starres unflexibles Polymer. Es ist bekannt, dass bei starren Polymerketten die Viskosität mit steigendem Molekulargewicht stark ansteigt und damit bei der Synthese der Molekulargewichtsaufbau begrenzt wird bzw. sich höhere Molekulargewichte schlecht darstellen lassen. Ferner sind aufgrund des starren Charakters der Monomere (und entsprechend der Polymerketten) die mechanischen Eigenschaften in der Regel weniger gut. Terzopoulou et al. beschreiben nicht, wie sich amorphe Polymere mit hoher Glastemperatur und gleichzeitig guten mechanischen Eigenschaften erhalten lassen.

Wang et al. (European Polymer Journal 109 (2018) 379-390) beschreiben ebenfalls Polyester aus Furandicarbonsäure und Cyclohexandimethanol. Auch diese Materialien weisen einen kristallinen Charakter auf. Auch die US2019/375890 A1 beschreibt Polyester umfassend Isosorbid, Furandicarbonsäure und Cyclohexandimethanol.

In der CN 110 183 633 A wird ein Polyestercarbonat offenbart, welches Isosorbid, Furandicarbonsäure und ein lineares Diol umfasst.

Liu et al. (ACS Sustainable Chem. Eng. 2019, 7, 6401-6411) beschreiben den Zielkonflikt zwischen hoher Glastemperatur und Flexibilität von Polyestern. Starre Bausteine wie starre Cyclen in der Polymerkette erhöhen die Glastemperatur wohingegen der Einbau von flexiblen Bausteinen - wie z.B. Cyclohexandimethanol - zur Erreichung hoher Molekulargewichte beiträgt. Die Autoren beschreiben optimierte Polyester aus starren Bausteinen wie Furandicarbonsäure und Tetramethylcyclobutandiol sowie flexiblen Diolen wie Cyclohexandimethanol. Mit dieser Strategie lassen sich relativ hohe Molekulargewichte aber nur moderate Glastemperaturen von ca. 100 °C erreichen. Die Autoren lassen keine Lehre erkennen, wie sich Materialien mit höheren Glastemperaturen bei gleichzeitigem Erhalt von Kettenwachstum während der Herstellung und amorphen Charakter erhalten lassen.

Auch die US 2019/0375890 A1 beschreibt Polyester aus Furandicarbonsäure, Isosorbid, Cyclohexandimethanol sowie Ethylenglykol. Diese Polyester weisen zwar einen amorphen Charakter auf: Jedoch beleibt die Glastemperatur bei allen gezeigten Einstellungen unterhalb von 100 °C.

In Beispiel 6 der WO2020/085686 A1 wird ein Polyestercarbonat offenbart, welches hergestellt wird aus 0,7 mol-% Isosorbid, 0,3 mol-% Cyclohexandimethanol, 0,2 mol-% Diphenylester der Cyclohexandicarbonsäure, 0,2 mol-% Diphenylester der Terephthalsäure, 0,2 mol-% Diphenylester der Furandicarbonsäure und 0,4 mol-% Diphenylcarbonat. Damit werden insgesamt 0,6 mol-% Diphenylester von Säuren eingesetzt, was unter Annahme eines vollständigen Umsatzes zu 37,5 mol-% dieser Säuren in Bezug auf die Strukturmotive von Isosorbid, Cyclohexandimethanol und aller Säuren im resultierenden Polyestercarbonat führt. Weder die Terephthalsäure noch die Cyclohexandicarbonsäure sind biobasiert, wodurch der Gesamtanteil an biobasierten Ausgangsstoffen in diesem offenbarten Polymer optimierbar ist.

Die einfache Herstellung von aromatischen Polyestercarbonaten ist beispielsweise in der WO 01/32742 A1 beschrieben. Dort wird eine Direktsynthese oder auch one-pot-Synthese gezeigt, das heißt, eine Synthese, bei der alle das spätere Polyestercarbonat aufbauenden Strukturmotive bereits zu Beginn der Synthese als Monomere anwesend sind. Hier werden als Monomere aromatische Dihydroxyverbindungen wie beispielsweise Bisphenol A, Carbonsäurediester und aromatische oder lineare aliphatische Disäuren eingesetzt. Dadurch, dass in diesem Dokument ausschließlich aromatische Polyestercarbonate hergestellt werden, können bei der Reaktion der Aufkondensation unter Entfernung des entstehenden Phenols Temperaturen von 300 °C verwendet werden. Die Verwendung solcher Temperaturen ist bei der Herstellung vonPolyestercarbonaten mit 1,4:3,6-Dianhydrohexitolen nicht möglich, da aliphatische Diole bei dieser Temperaturbelastung eliminieren und/oder zu thermischer Zersetzung neigen. Gleichzeitig wird die hohe Temperatur jedoch benötigt, um die gewünschten hohen Molekulargewichte aufzubauen. Hier wird insbesondere die unterschiedliche Reaktivität von aliphatischen und aromatischen Diolen deutlich. Aus der Literatur ist es bekannt, dass beispielsweise Isosorbid selten komplett in ein Polymer einbaut, sondern dass je nach gewählten Reaktionsbedingungen bis zu 25 % des Isosorbids bei der Polymerisationsreaktion verloren werden. Eine Übertragung von Reaktionsbedingungen für aromatische Diole auf aliphatische Diole ist daher nicht ohne Weiteres möglich. Dies wird insbesondere auch daran ersichtlich, dass die Reaktionszeiten der Polykondensation (entspricht Verfahrensschritt (ii)) in der WO01/32742 A1 bei höheren Temperaturen deutlich länger sind als die erfindungsgemäß beobachteten.

In der noch nicht veröffentlichten Anmeldung PCT/EP2019/084847 wird eine one-pot Synthese eines Polyestercarbonats, umfassend eine cycloaliphatische Dicarbonsäure, ein Diarylcarbonat und eine aliphatische Dihydroxyverbindung, offenbart.

Die Polyestercarbonate, welche in EP 3026074 A1 und in EP 3248999 A1 beschrieben sind, weisen hohe Glastemperaturen auf. Allerdings ist die Struktur dieser Polyestercarbonate sehr starr. Dies ist insbesondere eine Folge der in die Polymerkette einkondensierten Isosorbidstruktur. Die bicyclische Teilstruktur erhöht aufgrund des starren Charakters die Glastemperatur - allerdings macht es die Polymerkette sehr unflexibel; dies kann prinzipiell zu Nachteilen führen. Park et al beschreiben, dass durch höhere Mengen Isosorbid im Polymer das Molekulargewicht sinkt (S. A. Park et al. Polymer 2017, 116, 153 - 159; S.155/156). Die Autoren beschreiben, dass durch die hohe Schmelzeviskosität der Molekulargewichtsaufbau verhindert wird. Wird eine kritisches Molekulargewicht nicht erreicht, kann dies zu nicht ausreichenden mechanischen Eigenschaften führen. Dies ist insbesondere bei unflexiblen Polymerketten wichtig. Die starren Ketten benötigen ein relativ hohes Molekulargewicht, um sich verhaken zu können. Ist dies nicht der Fall resultiert ein sprödes Verhalten (kritisches Entanglement-Molekulargewicht).

Ausgehend von diesem Stand der Technik lag der vorliegenden Erfindung daher die Aufgabe zu Grunde, ein Polyestercarbonat bereit zu stellen, welches sich durch einen hohen Anteil biobasierter Strukturmotive auszeichnet, durch eine einfache Synthese zugänglich ist, einen amorphen Charakter mit hohen Glasübergangstemperaturen und ein ausreichend hohes Molekulargewicht zur Erzielung einer guten Mechanik aufweist. Dabei wird erfindungsgemäß bevorzugt unter einem "hohen Anteil an biobasierten Strukturmotiven" ein Anteil von mindestens 55 mol-%, besonders bevorzugt 60 mol-% und insbesondere bevorzugt von mehr als 65 mol-% biobasierter Strukturmotive verstanden, wobei die mol-% sich auf die Summe der eingesetzten Monomere (bis auf das Monomer, aus dem die Carbonat-Struktur resultiert (z. B. Diphenylcarbonat) beziehen. Der Begriff "einfaches Verfahren" ist dabei insbesondere als ein Verfahren zu verstehen, welches apparativ unaufwendig ist, wenige Stufen, insbesondere Aufreinigungsstufen umfasst und/ oder

somit ökonomisch und auch ökologisch vorteilhaft ist. Insbesondere soll das erfindungsgemäße Verfahren ohne in der Handhabung herausfordernde Einsatzstoffe, insbesondere von Phosgen, auskommen. Bevorzugt sollen dabei Glasübergangstemperaturen erzielt werden von größer 100 °C, besonders bevorzugt größer 110 °C und ganz besonders bevorzugt größer 120 °C. Vorzugsweise wird unter "ausreichend hohe Molekulargewichte" ein Polymer verstanden, welches eine relative Lösungsviskosität oberhalb von 1,20 aufweist, bevorzugt 1,20 bis 1,70 und weiter bevorzugt 1,22 bis 1,65 jeweils gemessen in Dichlormethan bei einer Konzentration von 5 g/l bei 25 °C mit einem Ubbelohdeviskosimeter.Ferner sollten die erfindungsgemäßen Polyestercarbonate somit über bessere Verarbeitungseigenschaften und gute, bevorzugt bessere mechanische Eigenschaften verfügen. Diese sollen insbesondere aus der ausreichend hohen Molmasse resultieren. Hohe Molekulargewichte resultieren beispielsweise durch eine bessere Oberflächenerneuerung im Herstellungsprozess.. Mit einer guten, vorzugsweise besseren Mechanik sind vorzugsweise Eigenschaften wie die Bruchdehnung, der E-Modul und/oder die Schlagzähigkeit gemeint.

Mindestens eine, bevorzugt alle der oben genannten Aufgaben wurden durch die vorliegende Erfindung gelöst. Überraschend wurde gefunden, dass die Synthese eines Polyestercarbonats mindestens einer Furandicarbonsäure, mindestens einem Diarylcarbonat, mindestens einem 1,4:3,6-Dianhydrohexitol und mindestens einer weiteren cycloaliphatischen Dihydroxy-Verbindung mittels Schmelzeumesterung in einer Direktsynthese oder one-pot-Synthese, bei der alle das spätere Polyestercarbonat aufbauenden Strukturmotive bereits zu Beginn der Synthese als Monomere anwesend sind, möglich ist. Dabei wurde gefunden, dass die gleichen Synthesebedingungen für Terephthalsäure anstatt von Furandicarbonsäure nicht zu einem ausreichenden Molekulargewichtsaufbau führten.. Somit konnte ein Verfahren aufgefunden werden, welches ein Polyestercarbonat mit einem hohen Anteil an biobasierten Strukturmotiven zugänglich macht, welches besonders einfach, das heißt, apparativ unaufwendig ist, wenige Stufen, insbesondere Aufreinigungsstufen erfordert und somit ökonomisch und auch ökologisch vorteilhaft ist. Zudem wurden somit Polyestercarbonate zugänglich gemacht, welche einen amorphen Charakter mit hohen Glasübergangstemperaturen aufweisen. Insgesamt konnten somit Polyestercarbonate bereitgestellt werden, deren aufbauende Strukturelemente zum einen für eine gute Balance zwischen Starrheit und Flexibilität der Polymerketten verantwortlich sind, welche aber zum anderen insgesamt auch ein ausreichend großes Molekulargewicht aufweisen, das zu entsprechend guten mechanischen Eigenschaften wie Bruchdehnung, E-Modul und/oder Schlagzähigkeit führt. Insbesondere wurde ein Verfahren aufgefunden, bei dem das Verhältnis von Diolen (oder erfindungsgemäß auch Dihydroxy-Verbindungen) zu Säuren frei und flexibel einstellbar ist. Dadurch resultieren Polyestercarbonate, mit frei und flexibel einstellbaren Anteilen and Ester-Gruppen und Carbonat-Gruppen. Auf diese Weise sind nun Polyestercarbonate mit gezielt einstellbaren mechanischen Eigenschaften zugänglich. So werden insbesondere Polyestercarbonate bereitgestellt mit einem im Vergleich zum Stand der Technik geringerem Gehalt an Estergruppen. Umgekehrt weisen die erfindungsgemäßen Polyestercarbonate dadurch einen erhöhten Anteil an Carbonat-Gruppen auf. Diese freie Wählbarkeit der einzelnen Strukturmotive führt dazu, dass ein Polyestercarbonat mit einem hohen Anteil an biobasierten Strukturmotiven, amorphen Charakter mit hohen Glasübergangstemperaturen und ausreichend hohem Molekulargewicht zur Erzielung einer guten Mechanik zugänglich gemacht wurde. Es ist daher auch bevorzugt, dass das erfindungsgemäße Polyestercarbonat keinen Polyesterblock aufweist. Dabei wird erfindungsgemäß ein Polyesterblock bevorzugt so verstanden, dass mehr als 4, besonders bevorzugt mehr als 5, ganz besonders bevorzugt mehr als 10 Wiederholungseinheiten der Formel (1), welche durch die Klammer $[...]_x$ eingerahmt sind, aufeinander folgen. Solche Polyesterblöcke schränken die zuvor beschrieben Flexibilität in Bezug auf Einstellung meachanischer Eigenschaften ein, da hier immer ein Verhältnis von Disäure zu Diol von 1:1 gewählt werden muss.

Erfindungsgemäß wird daher ein Polyestercarbonat bereitgestellt, umfassend die Strukturformel (1)

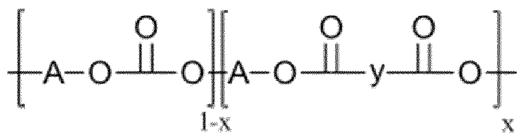

(1),

in der

A pro Wiederholungseinheit unabhängig voneinander zumindest entweder Struktureinheit (A) oder Struktureinheit (B) darstellt, wobei

(A) für die chemische Formel (2) steht

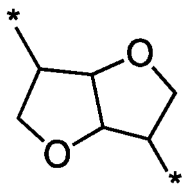

(2)

und

(B) für die chemische Formel (3) steht

*—x—* (3),

wobei x für eine Cycloalkylen-Gruppe mit 4 bis 20, bevorzugt 5 bis 15 Kohlenstoffatomen steht und wobei das Polyestercarbonat immer die Struktureinheiten (A) und (B) umfasst,
y jeweils unabhängig voneinander für die chemische Formel (IV) steht

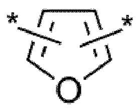

(IV),

und

$$0 < x < 1,$$

wobei die * jeweils die Position angeben, an der die chemischen Formeln ins Polyestercarbonat eingebunden sind, dadurch gekennzeichnet, dass das Polyestercarbonat zu 5 mol-% bis 30 mol-%, bevorzugt 7 mol-% bis 25 mol-%, besonders bevorzugt 9 mol-% bis 20 mol-% aus dem Strukturmotiv

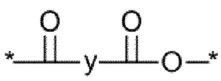

besteht, bezogen auf die gesamte Summe der folgenden Strukturmotive

*—x—O—* , 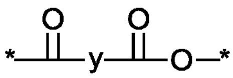 und 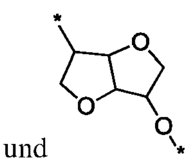 .

In der Strukturformel (1) wird der Bestandteil "A" näher definiert. A kann entweder zumindest die Struktureinheit (A) oder Struktureinheit (B) darstellen. Dies ist unabhängig voneinander für jede Wiederholungseinheit frei wählbar. Erfindungsgemäß bezieht sich der Begriff "Wiederholungseinheit" bevorzugt auf die entweder von durch "$[...]_{1-x}$" oder durch "$[...]_x$" eingerahmte Struktur. Damit umfasst die Strukturformel (1) bereits zwei unterschiedliche Wiederholungseinheiten, welche entweder eine Carbonatstruktur oder eine Esterstruktur zusätzlich zu A aufweisen. A stellt pro Wiederholungseinheit der Strukturformel (1) unabhängig voneinander zumindest entweder Struktureinheit (A) oder Struktureinheit (B) dar. Dabei bedeutet die Verwendung des Begriffs "zumindest", dass A auch noch für eine weitere Struktureinheit (C) stehen kann. Jedoch umfasst das erfindungsgemäße Polyestercarbonat immer zwingend Struktureinheiten (A) und (B). Bevorzugt besteht A nur aus den Struktureinheiten (A) und (B) und umfasst keine weitere Struktureinheit (C). In diesem Fall stellt A pro Wiederholungseinheit der Strukturformel (1) unabhängig voneinander entweder Struktureinheit (A) oder Struktureinheit (B) dar. Des Weiteren ist dem Fachmann ersichtlich, dass (A) mehrere verschiedene Strukturen der Formel (2) aufweisen können. Ebenso kann (B) mehrere verschiedene Strukturen der Formel (3) aufweisen. Bevorzugt weist (A) jedoch nur eine Struktur der Formel (2) auf. Ebenso bevorzugt weist (B) jedoch nur eine Struktur der Formel (3) auf. Besonders bevorzugt weisen (A) und (B) nur eine Struktur der Formel (2) bzw. (3) auf.

Erfindungsgemäß wird zwischen einer Wiederholungseinheit, einer Struktureinheit und einem Strukturmotiv unterschieden. Dabei wird bevorzugt, wie oben bereits beschrieben, unter einer Wiederholungseinheit die Struktur verstanden, welche in Formel (1) durch die Klammern $[...]_{1-x}$ oder die Klammer $[...]_x$ eingerahmt wird. Damit umfasst Strukturformel (1) bereits zwei Wiederholungseinheiten. Sie weist zudem durch A mindestens die Struktureinheiten (A) und (B) auf. Die Struktureinheiten (A) und (B) (bzw. ggf. auch (C)) sind jeweils einmal in einer Wiederholungseinheit vorhanden. Pro Wiederholungseinheit können sie verschieden sein. Der Begriff Struktureinheit wird erfindungsgemäß bevorzugt für eine Struktur verwendet, welche an sich keine Wiederholungseinheit ist, da sie weder eine Carbonatstruktur noch eine Esterstruktur aufweist. Zudem stellt sie aber auch kein Strukturmotiv dar. Der Begriff wird daher für eine Struktur verwendet, welche kleiner ist als eine Wiederholungseinheit und ein Strukturmotiv. Erfindungsgemäß wird unter einem Strukturmotiv bevorzugt eine solche Struktur verstanden, welche sich von einem eingesetzten Monomer durch Reaktion zum Polymer ableiten lässt. Damit werden erfindungsgemäß unter einem Strukturmotiv zumindest die folgenden Strukturen verstanden:

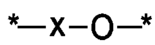 , 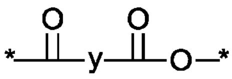 und 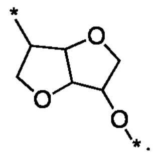

Dabei wird das erste Strukturmotiv von einem Diol abgeleitet, welches durch Reaktion in das Polymer der Strukturformel (1) eingebaut wird. Der Sauerstoff ist damit entweder Teil der Carbonat- oder Estereinheit in der Strukturformel (1). Das zweite Strukturmotiv ist auf ähnliche Weise von einer Dicarbonsäure abgeleitet. Das dritte Strukturmotiv ist ebenfalls auf ähnliche Weise von einem 1,4:3,6-Dianhydrohexitol abgeleitet.

Im Unterschied dazu weist eine Struktureinheit erfindungsgemäß somit kein Sauerstoff auf und ist somit nicht unmittelbar einem Monomer zuordbar. Struktureinheit (A) entspricht somit dem Strukturmotiv

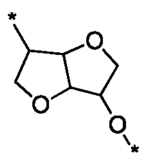

bis auf das Sauerstoffatom. Struktureinheit (B) entspricht dem Strukturmotiv

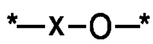

bis auf das Sauerstoffatom.

Insbesondere ist es bevorzugt, dass das erfindungsgemäße Polyestercarbonat dadurch gekennzeichnet ist, dass das Polyestercarbonat die folgenden Wiederholungseinheiten (i) bis (iv) in beliebiger Reihenfolge umfasst

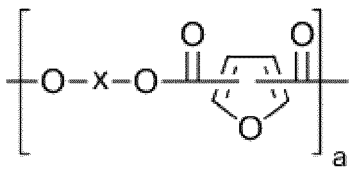

(i)

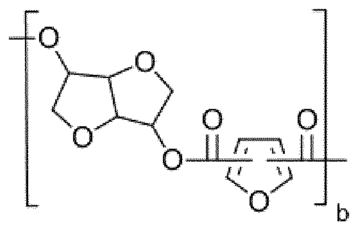

(ii)

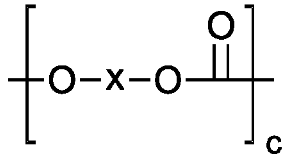

(iii)

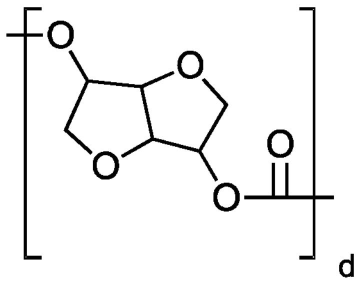

(iv)

in denen a, b, c und d jeweils unabhängig voneinander für eine natürliche Zahl stehen, welche jeweils die mittlere Anzahl an Wiederholungseinheiten angibt. Auch hier werden die Wiederholungseinheiten durch Klammern eingerahmt. Die Indices a, b, c und d stellen sich bevorzugt so ein, dass sich die erfindungsgemäße Lösungsviskosität ergibt. Es war erfindungsgemäß überraschend, dass die Zahlen a, b, c und d so hoch sind, dass ausreichend hohe Molekulargewichte erhalten wurden.

Dabei ist das erfindungsgemäße Polyestercarbonat insbesondere dadurch gekennzeichnet, dass in der Wiederholungseinheit (ii) eine unmittelbare Verknüpfung zwischen dem 1,4:3,6-Dianhydrohexitol der Furandicarbonsäure entsteht bzw. entstehen kann.

Erfindungsgemäß ist es bevorzugt, dass das Polyestercarbonat zu mindestens 80 Gew.-%, bevorzugt 85 Gew.-%, besonders bevorzugt 90 Gew.-%, weiterhin bevorzugt zu 95 Gew.-%, ebenso bevorzugt zu 99 Gew.-% aus der Strukturformel (1) besteht, bezogen auf das Gesamtgewicht des Polyestercarbonats. Damit weist das erfindungsgemäße Polyestercarbonat bevorzugt nur geringe Mengen an anderen Strukturen als die in der Strukturformel (1) definierten Strukturen auf. Dabei ist es des Weiteren bevorzugt, dass das erfindungsgemäße Polyestercarbonat keine andere funktionellen Strukturen als Carbonat- und/oder Esterstrukturen aufweist. Das bedeutet, dass sich die höchstens 20 Gew-%, bevorzugt höchstens 15 Gew.-%, besonders bevorzugt höchsten 10 Gew.-% welche nicht aus der Strukturformel (1) bestehen, bevorzugt aus anderen Diolen oder Dicarbonsäuren ableiten lassen, welche durch Einbau in das Polyestercarbonat wiederum zu Carbonat- oder Esterstrukturen führen. Erfindungsgemäß umfasst ist dabei jedoch die Tatsache, dass die Polymermoleküle jeweils noch OH-Endgruppen oder Säureendgruppen aufweisen können. Diese sind in der Regel in geringer Konzentration erfindungsgemäß vorhanden. Daher sind sie auch wenn das erfindungsgemäße Polyestercarbonat keine andere funktionellen Strukturen als Carbonat- und/oder Esterstrukturen aufweist, ebenfalls mit umfasst.

Das erfindungsgemäße Polyestercarbonat ist dadurch gekennzeichnet, dass es zu 5 mol-% bis 30 mol-%, bevorzugt 7 mol-% bis 25 mol-%, besonders bevorzugt 10 mol-% bis 20 mol-% aus dem Strukturmotiv

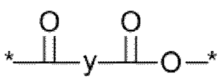

besteht, bezogen auf die gesamte Summe der folgenden Strukturmotive

*—x—O—*, 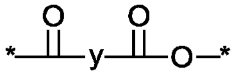 und 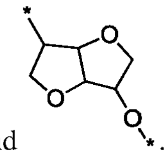.

Erfindungsgemäß lässt sich im Polyestercarbonat das Verhältnis der eingesetzten Monomere mit Hydroxy-Funktionalitäten zu Dicarbonsäuren in den genannten Bereichen frei einstellen.

Je mehr Dihydroxy-Verbindungen eingesetzt werden, desto mehr Carbonatstrukturen resultieren. Je mehr Dicarbonsäure, desto mehr Esterstrukturen. Dadurch ist somit das Verhältnis von Carbonatstrukturen zu Esterstrukturen ebenfalls frei wählbar. Es hat sich gezeigt, dass dies insbesondere am erfindungsgemäßen Verfahren liegt, bei dem alle das Polyestercarbonat aufbauenden Monomere bereits zu Beginn der Synthese vorhanden sind. Dies führt somit zu Polyestercarbonaten mit gezielt einstellbaren Eigenschaften innerhalb der erfindungsgemäß gesetzten Grenzen durch die einzelnen Bestandteile des Polyestercarbonats.

Bevorzugt wird (A) ausgewählt aus mindestens einer der Strukturen

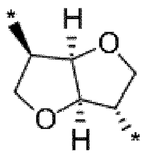, 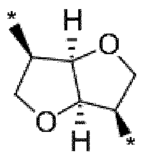 und 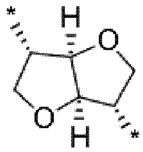.

Ganz besonders bevorzugt ist (A)

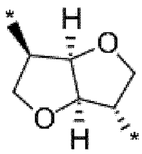

. Hierbei handelt es sich um ein Strukturmotiv, was biobasiert zugänglich ist. Somit erhöht die Anwesenheit dieser Komponente den Gesamtanteil an biobasierten Strukturmotiven im erfindungsgemäßen Polyestercarbonat.

Ebenso bevorzugt steht x in der chemischen Formel (3) für die Strukturformel (4):

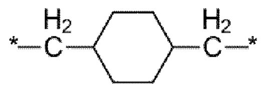

(4).

Besonders bevorzugt steht y in der chemischen Formel (1) für die chemische Formel (5) steht

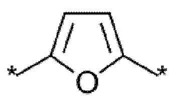

(5).

Bei dieser Struktur handelt es sich um das Strukturmotiv, welches von der 2,5-Furandicarbonsäure abgeleitet ist. Diese kann biobasiert hergestellt werden. Somit erhöht die Anwesenheit dieser Komponente den Gesamtanteil an biobasierten Strukturmotiven im erfindungsgemäßen Polyestercarbonat.

Bevorzugt ist das erfindungsgemäße Polyestercarbonat dadurch gekennzeichnet, dass es 50 mol-% bis 75 mol-%, bevorzugt 53 mol-% bis 72 mol-%, insbesondere bevorzugt 57 mol-% bis 70 mol-% der Struktureinheit (A) und 25 mol-% bis 50 mol-%, bevorzugt 28 mol-% bis 47 mol %, insbesondere bevorzugt 30 mol-% bis 43 mol-% der Struktureinheit (B), jeweils bezogen auf die Summe der Struktureinheiten (A) und (B), umfasst. Dabei hat sich herausgestellt, dass dieses Verhältnis besonders vorteilhaft für die mechanischen Eigenschaften ist. Dabei erhöht die Struktureinheit (A) die Glasübergangstemperatur und die Struktureinheit (B) bringt der Polymerkette gleichzeitig Flexibilität.

Ebenso ist es bevorzugt, dass das erfindugsgemäße Polyestercarbonat zu 40 mol-% bis 70 mol-%, bevorzugt zu 45 mol-% bis 65 mol-%, besonders bevorzugt zu 50 mol-% bis 60 mol-% aus der chemischen Formel (2)

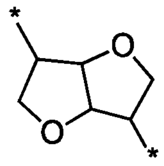 (2),

besonders bevorzugt aus der chemischen Formel

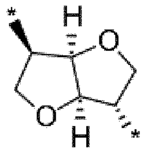

besteht, bezogen auf die gesamte Summe der folgenden Strukturmotive

*-x-O-*,

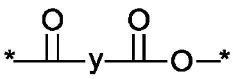 und 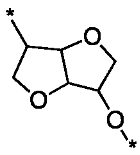.

Durch diesen hohen Anteil an Formel (2) im erfindungsgemäßen Polyestercarbonat wird zum einen der Gesamtanteil an biobasierten Struktureinheiten erhöht. Gleichzeitig erhöht dieses Strukturmotiv aber auch die Glasübergangstemperatur. Damit können die erfindungsgemäßen hohen Glasübergangstemperaturen erzielt werden.

Des Weiteren ist es bevorzugt, dass das erfindungsgemäße Polyestercarbonat zu 20 mol-% bis 40 mol-%, bevorzugt zu 22 mol-% bis 38 mol-%, besonders bevorzugt zu 25 mol-% bis 35 mol-% aus der chemischen Formel (3)

*—x—* (3),

besonders bevorzugt aus der chemischen Formel (4) besteht, jeweils bezogen auf die gesamte Summe der folgenden Strukturmotive

*-x-O-*

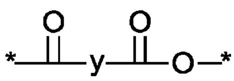 und 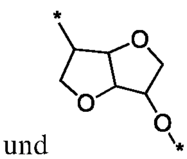.

Dieses Strukturmotiv verbessert insgesamt die Mechanik des erfindungsgemäßen Polyestercarbonats. Wie in der WO2020/085686 A1 gezeigt, ist diese Struktureinheit ebenfalls biobasiert zugänglich.

Zusätzlich können neben den genannten Strukturen für y auch noch Menge weitere Säuren eingesetzt werden. Diese sind bevorzugt biobasiert. Besonders bevorzugt weist y somit zusätzlich bis zu 60 mol-%, weiterhin bevorzugt bis zu 55 mol-% und ganz besonders bevorzugt bis zu 51 mol-% eine Strukturfomel y1 und/oder y2 auf, jeweils bezogen auf das gesamte Strukturmotiv

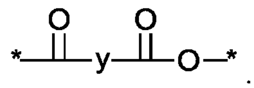

Bevorzugt weist y1 keinen Cyclus auf. Besonders bevorzugt wird y1 ausgewählt aus der Gruppe, bestehend aus 1,4-Butylen, 2,2,4-Trimethylbutylen, 2,4,4-Trimethylbutylen, 2,2,5-Trimethylbutylen, 3,3-Propylen und 3,3-Dimethylpropylen. Ganz besonders bevorzugt weist das erfindungsgemäße Polyestercarbonat zusätzlich bis zu 60 mol-%, weiterhin bevorzugt bis zu 55 mol-% und ganz besonders bevorzugt bis zu 51 mol-% 1,4-Butylen als Strukturformel y1, welche für y ausgewählt werden kann, auf, jeweils bezogen auf das gesamte Strukturmotiv

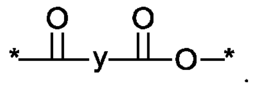

Dabei hat sich herausgestellt, dass dadurch insgesamt der Gesamtanteil an biobasierten Strukturmotiv beibehalten werden kann, insgesamt aber ein höheres Molekulargewicht und somit gute mechanische Eigenschaften, bevorzugt besser mechanische Eigenschaften erzielt werden können.

Ebenso ist es möglich, dass y2 ausgewählt wird aus der Gruppe bestehend aus von den folgenden Dicarbonsäuren abgeleiteten Strukturen Isophthalsäure, Terephthalsäure und 2,6-Napthalindicarbonsäure. Hierbei ist ersichtlich, dass die entstehenden Estergruppe nicht zur Struktureinheit y2 gehören Besonders bevorzugt enthält das erfindungsgemäße Polyestercarbonat jedoch keine weiteren aromatischen Strukturen, welche von aromatischen Dicarbonsäuren abgeleitet sind. Insbesondere ist es nachteilig, dass die genannten Säuren zum Anmeldezeitpunkt nicht kommerziell biobasiert zugänglich sind. Zusätzlich hat sich herausgestellt, dass beispielsweise die Terephthalsäure nicht besonders gut über das erfindungsgemäße Verfahren in das Polyestercarbonat einbaut.

Besonders bevorzugt weist das erfindungsgemäße Polyestercarbonat kein y auf, welches von einer petrobasierten Säure abgeleitet ist. Ebenso bevorzugt weist das Polyestercarbonat insgesamt keine Wiederholungseinheit auf, welche von einer petrobasierten Säure abgeleitet ist. Dabei ist es insbesondere bevorzugt, dass das Polyestercarbonat kein y aufweist, welches für Cyclohexylen steht (abgeleitet von der Cyclohexandicarbonsäure). Dies bedeutet, dass es besonders bevorzugt ist, dass das erfindungsgemäße Polyestercarbonat insgesamt keine Wiederholungseinheit aufweist, welche von Cyclohexandicarbonsäure abgeleitet ist. Diese Säure senkt den Gesamtanteil an biobasierten Strukturmotiven des Polyestercarbonats, da sie zum Anmeldezeitpunkt nicht kommerziell biobasiert zugänglich war.

Des Weiteren ist es erfindungsgemäß auch nicht ausgeschlossen, dass A zusätzlich für die Struktureinheit (C) steht. Dabei umfasst (C) aliphatische und/oder aromatische Strukturen, welche von (A) und (B) verschieden sind. Diese sind bevorzugt jedoch nur zu geringen Anteilen vorhanden. Bevorzugt ist (C) zusätzlich bis zu 20 mol-%, weiterhin bevorzugt bis zu 10 mol-% und ganz besonders bevorzugt bis zu 5 mol-% in Bezug auf die gesamte Summe der Struktureinheiten (A), (B) und (C) vorhanden. Dabei bleibt das bevorzugte definierte Verhältnis von (A) und (B) gleich. In diesen Fällen wird erfindungsgemäß bevorzugt immer noch von einem aliphatischen Polyestercarbonat gesprochen. Besonders bevorzugt weist das erfindungsgemäße Polyestercarbonat jedoch keine Struktureinheit (C) auf. Genauso ist es bevorzugt, dass das erfindungsgemäße Polyestercarbonat weder eine Struktureinheit (C) noch eine Struktureinheit y2 aufweist. Dementsprechend ist es bevorzugt, dass A aus (A) und (B) besteht.

Diese zusätzlichen Struktureinheiten (C) werden bevorzugt ausgewählt aus der Gruppe bestehend aus der Struktureinheit x1, welche für x in der chemischen Formel (3) steht, wobei x1 für eine lineare Alkylen-Gruppe mit 2 bis 22, bevorzugt 2 bis 4 Kohlenstoffatomen, welche gegebenenfalls durch mindestens ein Heteroatom unterbrochen sein kann oder eine verzweigte Alkylen-Gruppe mit 4 bis 20, bevorzugt 5 bis 15 Kohlenstoffatomen, welche gegebenenfalls durch mindestens ein Heteroatom unterbrochen sein kann, steht. Wenn x1 für eine lineare Alkylen-Gruppe, welche gegebenenfalls durch mindestens ein Heteroatom unterbrochen sein kann, steht, so weist diese bevorzugt 2 bis 15, besonders bevorzugt 2 bis 12, ganz besonders bevorzugt 2 bis 11, insbesondere bevorzugt 2 bis 10, weiter bevorzugt 2 bis 6 und weiter bevorzugt 3 bis 4 Kohlenstoffatome auf. Bei dem Heteroatom, welches gegebenenfalls die Alkylen-Gruppe unterbrechen kann, handelt es sich bevorzugt um Sauerstoff oder Schwefel, besonders bevorzugt um Sauerstoff. Besonders bevorzugt enthält die Alkylen-Gruppe nur ein Heteroatom oder kein Heteroatom. Ist mindestens ein Heteroatom in der Alkylen-Gruppe vorhanden, so bezieht sich die angegebene Kohlenstoffatomanzahl auf die Gesamtzahl der Kohlenstoffatome in der Alkylen-Gruppe. Beispielsweise enthält die Gruppe $-CH_2-CH_2-O-CH_2-CH_2-$ 4 Kohlenstoffatome. Erfindungsgemäß ist es bevorzugt, dass die lineare Alkylen-Gruppe, welche gegebenenfalls durch mindestens ein Heteroatom unterbrochen ist, weniger als 12, besonders bevorzugt weniger als 10 Kohlenstoffatome aufweist. Besonders bevorzugt weist die Alkylen-Gruppe kein Heteroatom auf.

Handelt es sich erfindungsgemäß bei x1 um eine verzweigte Alkylen-Gruppe mit 4 bis 20, bevorzugt 5 bis 15 Kohlenstoffatomen, besonders bevorzugt 5 bis 11 Kohlenstoffatomen, ganz besonders bevorzugt 5 bis 10 Kohlenstoffatomen, welche gegebenenfalls durch mindestens ein Heteroatom unterbrochen sein kann, so gelten die oben genannten Ausführungen für das Heteroatom. Bei dem Heteroatom, welches gegebenenfalls die verzweigte Alkylen-Gruppe unterbrechen kann, handelt es sich bevorzugt um Sauerstoff oder Schwefel, besonders bevorzugt um Sauerstoff. Besonders bevorzugt enthält die verzweigte Alkylen-Gruppe nur ein Heteroatom oder kein Heteroatom. Besonders bevorzugt weist die verzweigte Alkylen-Gruppe kein Heteroatom auf. Unter dem Begriff "verzweigt" werden die dem Fachmann bekannten Verzweigungen an aliphatischen Kohlenstoffketten verstanden. Dies bedeutet, dass die verzweigte Alkylen-Gruppe bevorzugt mindestens ein tertiäres und/oder mindestens ein quartäres Kohlenstoffatom umfasst. Es können mehr als eine Verzweigung in der verzweigten Alkylen-Gruppe vorhanden sein. Bevorzugt weisen die Verzweigungen Kettenlängen von 1 bis 5 Kohlenstoffatomen, besonders bevorzugt von 1 bis 4, ganz besonders bevorzugt von 1 bis 3 Kohlenstoffatomen auf. Diese Kohlenstoffatome der Verzweigungen zählen mit zur Gesamtkohlenstoffanzahl der verzweigten Alkylen-Gruppe. Dies bedeutet, dass beispielsweise eine verzweigte Alkylen-Gruppe von $-CH_2-C(CH_3)_2-CH_2-$ 5 Kohlenstoffatome aufweist.

Ebenso bevorzugt werden die zusätzlichen Struktureinheiten (C) ausgewählt aus der Gruppe von Struktureinheiten, welche abgeleitet werden von den folgenden Diolen Bisphenol A, 1,1-Bis-(4-hydroxyphenyl)-3,3,5-trimethylcyclohexan, 4,4'-Dihydroxybiphenyl (DOD), 4,4'-Dihydroxybiphenylether (DOD-Ether), Bisphenol B, Bisphenol M, den Bisphenolen (I) bis (III)

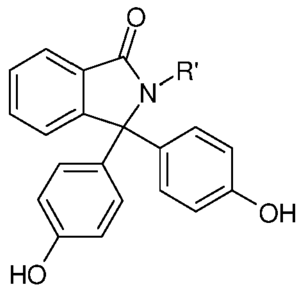
(I)

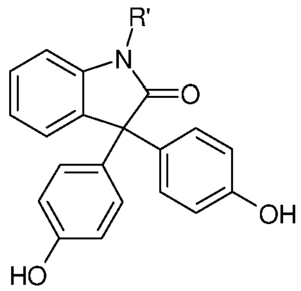
(II)

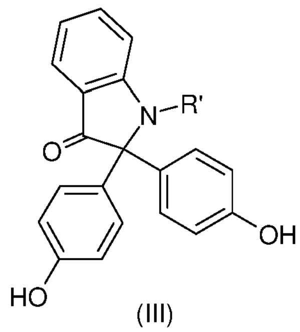
(III)

wobei in diesen Formeln (I) bis (III) R' jeweils für C1-C4-Alkyl, Aralkyl oder Aryl, bevorzugt für Methyl oder Phenyl, ganz besonders bevorzugt für Methyl, steht. Der Asudruck "abgeleitet von" bedeutet erfindungsgemäß bevorzugt, dass das entsprechende Monomer über die Hydroxylgruppe oder aber auch Säuregruppe in das entstehende Polyestercarbonat eingebracht wird entweder durch Ausbildung einer Estergruppe oder durch Ausbildung einer Carbonatgruppe.

Erfindungsgemäß ist es bevorzugt, dass, wenn weitere Bausteine zur Strukturformel (1) oder in der Strukturformel (1) vorhanden sind, die zuvor definierten mol-% und Verhältnisse erhalten bleiben. Die Stoffmenge des jeweils neu definierten Bausteins, kommt dann hinzu.

Ebenso ist es bevorzugt, dass die definierten mol-% in dem erfindungsgemäße Polyestercarbonat über $^1H$-NMR bestimmt werden. Dem Fachmann ist diese Methode bekannt. Das Polyestercarbonat kann beispielsweise in $CDCl_3$ gelöst werden und die entsprechenden Peaks der Struktureinheiten identifiziert werden. Über die Integrale können die Verhältnisse und Anteile bestimmt werden. Auf der anderen Seite sind die erfindungsgemäßen mol-% auch bestimmbar über die eingesetzten Stoffmengen und Verhältnisse der Monomere. Dabei muss angenommen werden, dass alle Monomere im gleichen Verhältnis vollständig in das Polyestercarbonat einbauen. So kann der Fachmann auch das Verhältnis im Vorhinein einstellen.

Das erfindungsgemäße Polyestercarbonat weist bevorzugt eine relative Lösungsviskosität von 1,20 bis 1,70, des weiteren bevorzugt 1,22 bis 1,65 jeweils gemessen in Dichlormethan bei einer Konzentration von 5 g/l bei 25 °C mit einem Ubbelohdeviskosimeter auf. Dem Fachmann ist die Bestimmung der relativen Lösungsviskosität mittels Ubbelohdeviskosimeter bekannt. Erfindungsgemäß wird diese bevorzugt gemäß DIN 51562-3; 1985-05 durchgeführt. Dabei werden die Durchlaufzeiten des zu vermessenden Polyestercarbonats durch das Ubbelohde-Viskosimeter gemessen, um anschließend den Viskositätsunterschied zwischen Polymerlösung und seinem Lösungsmittel zu ermitteln. Dazu wird zunächst eine Kalibrierung des Ubbelohde-Viskosimeters mittels Vermessung der reinen Lösungsmittel Dichlormethan, Trichlorethylen und Tetrachlorethylen durchgeführt (dabei erfolgen immer mindestens 3 Messungen, höchstens 9 Messungen). Daraufhin erfolgt die eigentliche Kalibrierung mit dem Lösungsmittel Dichlormethan. Im Anschluss wird die Polymerprobe eingewogen, in Dichlormethan gelöst und für diese Lösung dann dreimal die Durchflusszeit bestimmt. Der Mittelwert der Durchflusszeiten wird über die Hagenbach-Korrektur korrigiert und die relative Lösungsviskosität errechnet.

In einem weiteren Aspekt der vorliegenden Erfindung wird ein Verfahren zur Herstellung eines Polyestercarbonats, insbesondere des erfindungsgemäßen Polyestercarbonats mittels Schmelzeumesterung bereitgestellt, umfassend die Schritte

(i) Reaktion zumindest mindestens einer Dicarbonsäure der Formel (IVa)

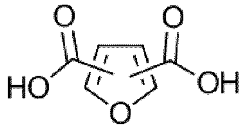

(IVa)

mit mindestens einem Diarylcarbonat unter Verwendung mindestens eines Katalysators und in Anwesenheit einer Mischung aus Dihydroxy-Verbindungen, umfassend (A) mindestens ein 1,4:3,6-Dianhydrohexitol und (B) mindestens eine weitere cycloaliphatische Dihydroxyverbindung, und

(ii) weitere Aufkondensation des aus Verfahrensschritt (i) erhaltenen Gemisches zumindest unter Entfernung der bei der Kondensation abgespaltenen chemischen Verbindung.

Erfindungsgemäß findet in Verfahrensschritt (i) zumindest die Reaktion mindestens der Dicarbonsäure der Formel (IVa) mit mindestens einem Diarylcarbonat statt. Jedoch kann erfindungsgemäß nicht ausgeschlossen werden, dass noch weitere Reaktionen durch die Anwesenheit des mindestens einen 1,4:3,6-Dianhydrohexitol (im Folgenden auch Komponente (A)) und der mindestens einen weiteren aliphatischen Dihydroxy-Verbindung (im Folgenden auch Komponente (B)) entstehen (hier ist zu beachten, dass Komponente (A) und Komponente (B) nachher zu den Struktureinheiten (A) und (B) im erfindungsgemäßen Polyestercarbonat führen). Tatsächlich konnte in Beispielen nachgewiesen werden, dass sich bereits im Verfahrensschritt (i) Oligomere bilden, welche im MALDI-ToF Massenspektrometer einen Massenabstand aufweisen, welche eine Einheit aus Komponente (A) und/oder Komponente (B) mit Carbonat (unter Verlust der beiden Hydroxy-Gruppen) entspricht. Dies bedeutet, dass in Verfahrensschritt (i) weitere Reaktionen neben der Bildung des Diesters stattfinden können. Dies bedeutet jedoch erfindungsgemäß auch, dass die Reaktion sämtlicher vorhandener Dicarbonsäure der Formel (IVa) mit den stöchimetrisch entsprechenden Diarylcarbonaten nicht vollständig stattgefunden haben muss, bis Verfahrensschritt (ii) initiiert wird. Bevorzugt wird jedoch erfindungsgemäß der Verfahrensschritt (i) so lang durchgeführt, bis ein wesentliches Abklingen der Gasbildung beobachtet werden kann, und dann wird erst Verfahrensschritt (ii) beispielsweise durch Anlegen eines Vakuums zur Entfernung der bei der Kondensation abgespaltenen chemischen Verbindung initiiert. Wie bereits oben ausgeführt, können die Verfahrensschritte (i) und (ii) jedoch gegebenenfalls erfindungsgemäß nicht scharf voneinander getrennt werden.

**Verfahrensschritt (i)**

Das erfindungsgemäße Verfahren wird als Direktsynthese oder auch one-pot-Synthese bezeichnet, da in Verfahrensschritt (i) bereits alle das spätere Polyestercarbonat aufbauenden Strukturmotive als Monomere anwesend sind. Dies bedeutet bevorzugt, dass erfindungsgemäß alle cycloaliphatischen Dihydroxy-Verbindungen (in jedem Fall Komponente (A) und (B)), alle Dicarbonsäuren der Strukturformel (IVa) und auch alle Diarylcarbonate in diesem Schritt anwesend sind, selbst wenn es sich um mehr als nur jeweils die cycloaliphatischen Dihydroxy-Verbindungen der Komponenten (A) und (B), eine Dicarbonsäure der Formel (IVa) und/oder ein Diarylcarbonat handelt. Damit ist es erfindungsgemäß bevorzugt, dass bereits während des Verfahrensschritts (i) alle Monomere, die in Verfahrensschritt (ii) zum Polyestercarbonat aufkondensiert werden, anwesend sind. Erfindungsgemäß ebenfalls umfasst kann die Ausführungsform sein, in der ein geringer Anteil des mindestens einen Diarylcarbonats zusätzlich in Verfahrensschritt (ii) zugegeben wird. Dies kann gezielt dazu eingesetzt werden, um den OH-Endgruppengehalt des entstehenden Polyestercarbonats zu reduzieren. Ein solches Vorgehen ist beispielsweise in der JP2010077398 A beschrieben. Hierbei ist es jedoch erforderlich, dass das in geringen Mengen in Verfahrensschritt (ii) hinzugefügte mindestens eine Diarylcarbonat dem in Verfahrensschritt (i) anwesenden mindestens einem Diarylcarbonat entspricht, damit immer noch alle das spätere Polyestercarbonat aufbauenden Strukturelemente als Monomere in Verfahrensschritt (i) anwesend und keine weiteren Strukturelemente zugefügt werden. In diesem Sinne kann also immer noch von einer Direktsynthese oder one-pot-Synthese gesprochen werden.

Des Weiteren ist es erfindungsgemäß auch nicht ausgeschlossen, dass weitere aliphatischen oder aromatischen Dihydroxyverbindungen und/oder Dicarbonsäuren in Verfahrensschritt (i) vorhanden sind. Diese weiteren aliphatischen oder aromatischen Dihydroxyverbindungen sind bevorzugt jedoch nur zu geringen Anteilen vorhanden. Besonders bevorzugt sind in Verfahrensschritt (i) zusätzlich bis zu 20 mol-%, weiterhin bevorzugt bis zu 10 mol-% und ganz besonders bevorzugt bis zu 5 mol-% einer aromatischen Dihydroxy-Verbindung (Komponente (C)) in Bezug auf die gesamte Stoffmenge der eingesetzten Dihydroxy-Verbindung vorhanden. Dabei bleibt das bevorzugt definierte Verhältnis der Komponenten (A) und (B) gleich. Ebenso ist es besonders bevorzugt, dass in Verfahrensschritt (i) zusätzlich,

gegebenenfalls auch zusätzlich zur aromatischen Dihydroxy-Verbindung bis zu 60 mol-%, weiterhin bevorzugt bis zu 55 mol-% und ganz besonders bevorzugt bis zu 51 mol-% einer weiteren Dicarbonsäure, besonders bevorzugt Adipinsäure in Bezug auf die gesamte Stoffmenge der eingesetzten Dicarbonsäure vorhanden ist. Besonders bevorzugt wird jedoch keine weitere aliphatische oder aromatische Dihydroxy-Verbindung in Verfahrensschritt (i) eingesetzt. Ebenso bevorzugt wird keine weitere Dicarbonsäure in Verfahrensschritt (i) eingesetzt. Genauso ist es bevorzugt, dass in Verfahrensschritt (i) weder eine weitere aliophatische oder aromatische Dihydroxy-Verbindung noch eine weitere Dicarbonsäure eingesetzt wird. Dadurch wird das Verfahren insgesamt einfacher handhabar, da weniger Monomere und somit weniger Einflussparameter vorhanden sind. In einer anderen Ausführungsform wird bevorzugt noch Adipinsäure in Verfahrensschritt (i) eingesetzt. Diese wird bevorzugt bis zu 60 mol-%, weiterhin bevorzugt bis zu 55 mol-% und ganz besonders bevorzugt bis zu 51 mol-% in Bezug auf die gesamte Stoffmenge der eingesetzten Dicarbonsäuren eingesetzt. Damit werden bevorzugt nur biobasierte Dicarbonsäuren in Verfahrensschritt (i) eingesetzt.

Diese zusätzlichen weiteren aliphatischen Dihydroxy-Verbindungen (Komponente (C)) weisen bevorzugt die chemische Formel (I) auf:

HO-X-OH (I),

in der X für eine lineare Alkylen-Gruppe mit 2 bis 22, bevorzugt 2 bis 15 Kohlenstoffatomen, besonders bevorzugt 2 bis 10 Kohlenstoffatomen, welche gegebenenfalls durch mindestens ein Heteroatom unterbrochen sein kann, oder eine verzweigte Alkylen-Gruppe mit 4 bis 20, bevorzugt 5 bis 15 Kohlenstoffatomen, welche gegebenenfalls durch mindestens ein Heteroatom unterbrochen sein kann .

Handelt es sich erfindungsgemäße bei X um eine lineare Alkylen-Gruppe, welche gegebenenfalls durch mindestens ein Heteroatom unterbrochen sein kann, so weist diese bevorzugt 2 bis 15, besonders bevorzugt 2 bis 12, ganz besonders bevorzugt 2 bis 11, insbesondere bevorzugt 2 bis 10, weiter bevorzugt 2 bis 6 und weiter bevorzugt 3 bis 4 Kohlenstoffatome auf. Bei dem Heteroatom, welches gegebenenfalls die Alkylen-Gruppe unterbrechen kann, handelt es sich bevorzugt um Sauerstoff oder Schwefel, besonders bevorzugt um Sauerstoff. Besonders bevorzugt enthält die Alkylen-Gruppe nur ein Heteroatom oder kein Heteroatom. Ist mindestens ein Heteroatom in der Alkylen-Gruppe vorhanden, so bezieht sich die angegebene Kohlenstoffatomanzahl auf die Gesamtzahl der Kohlenstoffatome in der Alkylen-Gruppe. Beispielsweise enthält die Gruppe $-CH_2-CH_2-O-CH_2-CH_2-$ 4 Kohlenstoffatome. Erfindungsgemäß ist es bevorzugt, dass die lineare Alkylen-Gruppe, welche gegebenenfalls durch mindestens ein Heteroatom unterbrochen ist, weniger als 12, besonders bevorzugt weniger als 10 Kohlenstoffatome aufweist. Besonders bevorzugt weist die Alkylen-Gruppe kein Heteroatom auf.

Handelt es sich erfindungsgemäß bei X um eine verzweigte Alkylen-Gruppe mit 4 bis 20, bevorzugt 5 bis 15 Kohlenstoffatomen, besonders bevorzugt 5 bis 11 Kohlenstoffatomen, ganz besonders bevorzugt 5 bis 10 Kohlenstoffatomen, welche gegebenenfalls durch mindestens ein Heteroatom unterbrochen sein kann, so gelten die oben genannten Ausführungen für das Heteroatom. Bei dem Heteroatom, welches gegebenenfalls die verzweigte Alkylen-Gruppe unterbrechen kann, handelt es sich bevorzugt um Sauerstoff oder Schwefel, besonders bevorzugt um Sauerstoff. Besonders bevorzugt enthält die verzweigte Alkylen-Gruppe nur ein Heteroatom oder kein Heteroatom. Besonders bevorzugt weist die verzweigte Alkylen-Gruppe kein Heteroatom auf. Unter dem Begriff "verzweigt" werden die dem Fachmann bekannten Verzweigungen an aliphatischen Kohlenstoffketten verstanden. Dies bedeutet, dass die verzweigte Alkylen-Gruppe bevorzugt mindestens ein tertiäres und/oder mindestens ein quartäres Kohlenstoffatom umfasst. Es können mehr als eine Verzweigung in der verzweigten Alkylen-Gruppe vorhanden sein. Bevorzugt weisen die Verzweigungen Kettenlängen von 1 bis 5 Kohlenstoffatomen, besonders bevorzugt von 1 bis 4, ganz besonders bevorzugt von 1 bis 3 Kohlenstoffatomen auf. Diese Kohlenstoffatome der Verzweigungen zählen mit zur Gesamtkohlenstoffanzahl der verzweigten Alkylen-Gruppe. Dies bedeutet, dass beispielsweise eine verzweigte Alkylen-Gruppe von $-CH_2-C(CH_3)_2-CH_2-$ 5 Kohlenstoffatome aufweist.

Erfindungsgemäß wird bevorzugt mindestens eine weitere aliphatische und/oder aromatische Dihydroxy-Verbindung eingesetzt.

Die aromatischen Dihydroxy-Verbindungen (Komponente (C)) werden bevorzugt ausgewählt aus der Gruppe, bestehend aus Bisphenol A, 1,1-Bis-(4-hydroxyphenyl)-3,3,5-trimethylcyclohexan, 4,4'-Dihydroxybiphenyl (DOD), 4,4'-Dihydroxybiphenylether (DOD-Ether), Bisphenol B, Bisphenol M, den Bisphenolen (I) bis (III)

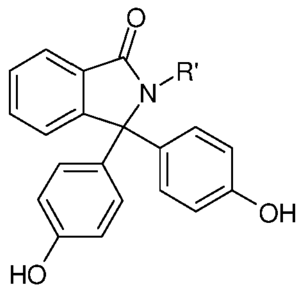
(I)

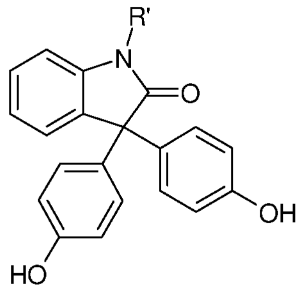
(II)

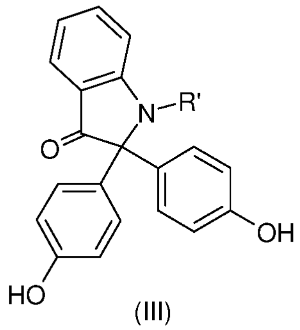
(III)

wobei in diesen Formeln (I) bis (III) R’ jeweils für C1-C4-Alkyl, Aralkyl oder Aryl, bevorzugt für Methyl oder Phenyl, ganz besonders bevorzugt für Methyl, steht.

Diese zusätzlichen Dicarbonsäuren werden bevorzugt ausgewählt aus der Gruppe, bestehend aus 2,2,4-Trimethyladipinsäure, 2,4,4-Trimethyladipinsäure, 2,2,5-Trimethyladipinsäure, 3,3-Dimethylglutarsäure, Isophthalsäure, Terephthalsäure, und 2,6-Napthalindicarbonsäure. Besonders bevorzugt wird die mindestens eine zusätzliche Dicarbonsäure ausgewählt aus der Gruppe bestehend aus 2,2,4-Trimethyladipinsäure, 2,4,4-Trimethyladipinsäure, 2,2,5-Trimethyladipinsäure und 3,3-Dimethylglutarsäure. Ganz besonders bevorzugt ist die eine weitere Dicarbonsäure Adipinsäure.

Erfindungsgemäß wird in Verfahrensschritt (i) als Komponente (A) mindestens ein 1,4:3,6-Dianhydrohexitol eingesetzt. Wie dem Fachmann bekannt ist, werden 1,4:3,6-Dianhydrohexitole in der Regel ausgewählt aus der Gruppe, bestehend aus Isomannid, Isoidid und Isosorbid. Dabei kann es sich um ein biobasiertes Strukturelement handeln, womit alle Vorteile eines biobasierten Monomers und dem daraus resultierenden Polymer einhergehen (z. B. bessere Nachhaltigkeit, da aus nachwachsenden Rohstoffen zugänglich). Besonders bevorzugt ist das erfindungsgemäße Verfahren dadurch gekennzeichnet, dass das mindestens eine 1,4:3,6-Dianhydrohexitol Isosorbid ist. Es ist bevorzugt, dass Komponente (A) aus Isosorbid besteht.

Erfindungsgemäß wird in Verfahrensschritt (i) mindestens eine weitere cycloaliphatische Dihydroxy-Verbindung (Komponente (B)) eingesetzt. Dabei ist es bevorzugt, dass Komponente (B) aus zwei weiteren cycloaliphatischen Dihydroxy-Verbindungen besteht. Ebenso ist es bevorzugt, dass Komponente (B) aus einer weiteren cycloaliphatischen Dihydroxy-Verbindungen besteht. Damit ist es insbesondere bevorzugt, dass Komponente (A) aus Isosorbid besteht und Komponente (B) aus einer weiteren cycloaliphatischen Dihydroxy-Verbindungen besteht. Gegebenenfalls kann in der Mischung aus Dihydroxy-Verbindungen noch eine Komponente (C) vorhanden sein,(siehe oben).

Besonders bevorzugt ist das erfindungsgemäße Verfahren dadurch gekennzeichnet, dass die mindestens eine cycloaliphatische Dihydroxy-Verbindung (Komponente (B)) ausgewählt wird aus der Gruppe, bestehend aus 1,2-Cyclohexandiol, 1,3-Cyclohexandiol, 1,4-Cyclohexandiol, 1,2-Cyclohexandimethanol, 1,3-Cyclohexandimethanol, 1,4-Cyclohexandimethanol 1 und beliebigen Mischungen daraus. Ganz besonders bevorzugt wird Komponente (B) ausgewählt aus der Gruppe, bestehend aus ,2-Cyclohexandimethanol, 1,3-Cyclohexandimethanol, 1,4-Cyclohexandimethanol. Besonders bevorzugt ist Komponente (B) 1,4-Cyclohexandimethanol.

Ebenso wird in Verfahrensschritt (i) erfindungsgemäß mindestens eine Dicarbonsäure der Formel (IVa) eingesetzt. Bevorzugt handelt es sich dabei um 2,5-Furandicarbonsäure.

Ebenso wird in Verfahrensschritt (i) erfindungsgemäß mindestens ein Diarylcarbonat eingesetzt. Dabei ist es bevorzugt, dass das mindestens eine Diarylcarbonat ausgewählt wird aus der Gruppe, bestehend aus einer Verbindung der Formel (2)

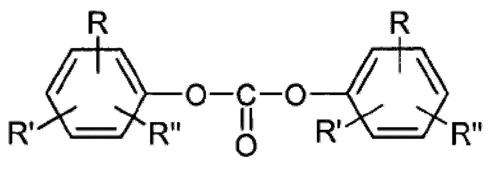
(2)

,

worin

R, R’ und R" jeweils unabhängig voneinander gleich oder verschieden sein können und für Wasserstoff, gegebenenfalls verzweigtes C1-C34Alkyl, C7-C34-Alkylaryl, C6-C34-Aryl, eine Nitrogruppe, eine Carbonyl-enthaltende Gruppe, eine Carboxyl-enthaltende Gruppe oder eine Halogengruppe stehen. Bevorzugt sind R, R’ und R" jeweils unabhängig voneinander gleich oder verschieden und stehen für Wasserstoff, gegebenenfalls verzweigtes C1-C34Alkyl, C7-C34-Alkylaryl, C6-C34-Aryl, eine Nitrogruppe, eine Carbonyl-enthaltende Gruppe oder eine Halogengruppe. Bevorzugt handelt

es sich bei dem mindestens einen Diarylcarbonat um Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1 -Methyl-1 -phenylethyl)-phenyl-phenyl-carbonat, Di-[4-(1-methyl-1-phenylethyl)-phenyl]-carbonat, Bis(methylsalicyl)carbonat, Bis(ethylsalicyl)carbonat, Bis(propylsalicyl)carbonat, Bis(2-benzoylphenylcarbonat), Bis(phenylslicyl)carbonat und/oder Bis(benzylsalicyl)carbonat. Bevorzugt handelt es sich bei dem mindestens einen Diarylcarbonat um Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1 - Methyl-1 -phenylethyl)-phenyl-phenyl-carbonat, Di-[4-(1-methyl-1-phenylethyl)-phenyl] -carbonat, Bis(2-benzoylphenylcarbonat), Bis(phenylslicyl)carbonat und/oder Bis(benzylsalicyl)carbonat.Insbesondere bevorzugt handelt es sich bei dem mindestens einen Diarylcarbonat um Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1 -Methyl-1 - phenylethyl)-phenyl-phenyl-carbonat und/oder Di-[4-(1-methyl-1-phenylethyl)-phenyl] -carbonat. Besonders bevorzugt ist das mindestens eine Diarylcarbonat Diphenylcarbonat.

In einer bevorzugten Ausführungsform wird in Verfahrensschritt (i) Isosorbid als Komponente (A), 1,4-Cyclohexandimethanol als Komponente (B), Diphenylcarbonat als Diarylcarbonat und 2,5-Furandicarbonsäure als Dicarbonsäure der Formel (IVa) eingesetzt. Dabei ist es insbesondere bevorzugt, dass Adipinsäure als weitere Dicarbonsäure eingesetzt wird. In dieser Ausführungsform ist es bevorzugt, dass keine weiteren Monomere eingesetzt werden.

Des Weiteren ist in Verfahrensschritt (i) erfindungsgemäß mindestens ein Katalysator vorhanden. Dabei handelt es sich bevorzugt um eine anorganische Base und/oder einen organischen Katalysator. Besonders bevorzugt handelt es sich bei dem mindestens einen Katalysator um eine anorganische oder organische Base mit einem $pK_B$-Wert von höchstens 5.

Ebenso ist es bevorzugt, dass die mindestens eine anorganische Base oder der mindestens eine organische Katalysator ausgewählt ist aus der Gruppe, bestehend aus Lithium-, Natrium-, Kalium-, Cäsium-, Calcium-, Barium-, Magnesium-, -hydroxide, -carbonate, -halogenide, -phenolate, - diphenolate, -fluoride, -acetate, -phosphate, -hydrogenphosphate, -boranate, Tetramethylammoniumhydroxid, Tetramethylammoniumacetat, Tetramethylammoniumfluorid, Tetramethylammoniumtetraphenylboranat, Tetraphenylphosphoniumfluorid, Tetraphenylphosphoniumtetraphenylboranat, Dimethyldiphenylammoniumhydoxid, Tetraethylammoniumhydroxid, Cethyltrimethylammoniumtetraphenylboranat, Cethyltrimethylammoniumphenolat, Diazabicycloundecen (DBU), Diazabicylononen (DBN), 1,5,7-Triazabicyclo-[4,4,0] -dec-5-en, 7-Phenyl-1,5,7-triazabicyclo-[4,4,0]-dec-5-en, 7-Methyl-1,5,7-triazabicyclo-[4,4,0]-dec-5-en, 7,7'-Hexylidendi-1,5,7-triazabi-cyclo-[4,4,0]-dec-5-en, 7,7'-Decylidendi-1,5,7-triazabicyclo-[4,4,0]-dec-5-en, 7,7'-Dodecyliden-di-1,5,7-tri-aza-bicyclo-[4,4,0]-dec-5-en, die Phosphazen-Base P1-t-Oct (tert.-Octyl-imino-tris-(dimethylamino)-phosphoran), die Phosphazen-Base P1-t-Butyl (tert.-Butyl-imino-tris-(dimethylamino)-phosphoran) und 2-tert.-Butylimino-2-diethylamino-1,3-dimethyl-perhydro-1,3,2-diaza-2-phos-phoran (BEMP). Es können auch beliebige Mischungen eingesetzt werden.

Besonders bevorzugt handelt es sich bei dem mindestens einem Katalysator um eine organische Base, bevorzugt die oben genannten, ganz besonders bevorzugt um Alkylamine, Imidazol(derivate), Guanidinbasen wie Triazabicyclodecen, DMAP und entsprechende Derivate, DBN und DBU, am bevorzugsten DMAP. Diese Katalysatoren bringen insbesondere den Vorteil, dass sie im erfindungsgemäßen Verfahrensschritt (ii) mit der bei der Kondensation abgespaltenen chemischen Verbindung beispielsweise durch Vakuum abgetrennt werden können. Dies bedeutet, dass das resultierende Polyestercarbonat nur einen geringen Gehalt bis gar keinen Katalysator mehr enthält. Dies bringt insbesondere den Vorteil, dass keine anorganischen Salze, welche beispielsweise immer über eine Route, bei der Phosgen verwendet wird, anfallen, im Polymer vorhanden sind. Es ist bekannt, dass solche Salze die Stabilität des Polyestercarbonats negativ beeinflussen können, da die Ionen katalytisch bei entsprechender Degradation wirken können.

Der mindestens eine Katalysator wird bevorzugt in Mengen von 1 bis 5000 ppm, vorzugsweise 5 bis 1000 ppm und besonders bevorzugt 20 bis 200 ppm, bezogen auf 1 Mol der cycloaliphatischen Dicarbonsäure, eingesetzt.

In einer anderen Ausführungsform ist das erfindungsgemäße Verfahren dadurch gekennzeichnet, dass die Reaktion in Verfahrensschritt (i) in Anwesenheit mindestens eines ersten Katalysators und / oder eines zweiten Katalysators durchgeführt wird und die Aufkondensation in Verfahrensschritt (ii) mindestens in Anwesenheit des ersten Katalysators und des zweiten Katalysators durchgeführt wird, wobei der erste Katalysator mindestens eine tertiäre Stickstoffbase ist, der zweite Katalysator mindestens eine basische Verbindung, bevorzugt ein basisch wirkendes Alkalimetallsalz ist und wobei der Anteil der Alkalimetallkationen in Verfahrensschritt (ii) 0,0008 bis 0,0050 Gew.-%, bezogen auf alle im Verfahrensschritt (i) eingesetzten Komponenten, beträgt.

Damit ist in dieser Ausführungsform ein erster Katalysator und / oder ein zweiter Katalysator anwesend in Verfahrensschritt (i) anwesend.

Bei dem erstem Katalysator handelt es sich um eine tertiäre Stickstoffbase. Bevorzugt ist dieser erste Katalysator ausgewählt aus von Guanidin abgeleiteten Basen, 4-Dimethylaminopyridin (DMAP), 1,8-Diazabicyclo[5.4.0]undec-7-en, 1,5-Diazabicyclo[4.3.0]non-5-en, 1,5,7-Triazabicyclo[4.4.0]dec-5-en, Hexamethylphosphorimidtriamid, 1,2 Dimethyl-1,4,5,6-tretrahydropyridin, 7-Methyl-1,5,7-triazabicyclodec-5-en, 1,8-Diazabicyclo[5.4.0]undec-7-en (DBU), DBN,

Ethylimidazol, N,N-Di-isopropyl ethylamin (Hünigs Base), Pyridin, TMG sowie Mischungen dieser Substanzen. Weiter bevorzugt wird der erste Katalysator ausgewählt aus Guanidin abgeleiteten Basen, 4-Dimethylaminopyridin (DMAP), 1,8-Diazabicyclo[5.4.0]undec-7-en, 1,5-Diazabicyclo[4.3.0]non-5-en, 1,5,7-Triazabicyclo[4.4.0]dec-5-en. Besonders bevorzugt wird 4-Dimethylaminopyridin eingesetzt.

Der erste Katalysator wird bevorzugt in einer Menge von 0,002 bis 0,10 Gew.-%, weiter bevorzugt in einer Menge von 0,005 bis 0,050 Gew, besonders bevorzugt in einer Menge von 0,008 bis 0,030 Gew, jeweils bezogen auf alle im Verfahrensschritt (i) eingesetzten Komponenten.

Es ist bevorzugt, dass der zweite Katalysator ausgewählt ist aus der Gruppe bestehend aus anorganischen oder organischen Alkalisalzen und anorganischen oder organischen Erdalkalisalzen. Weiterhin bevorzugt, handelt es sich bei den in Verfahrensschritt (ii) enthaltenen Alkalimetallkationen um Lithiumkationen, Kaliumkationen, Natriumkationen, Cäsiumkationen und Mischungen daraus.

Der eingesetzte zweite Katalysator ist das organische oder anorganische Alkali- oder Erdalkalisalz bevorzugt einer schwachen Säure (pKs zwischen 3 und 7 bei 25 °C). Geeignete schwache Säuren sind z.B. Carbonsäuren, bevorzugt C2- C22 Carbonsäuren, wie Essigsäure, Proprionsäure, Ölsäure, Stearinsäure, Laurinsäure, Benzoesäure, 4-Methoxybenzoesäure, 3-Methylbenzoesäure, 4-tert.-Butylbenzoesäure, p-Toluolessigsäure, 4-Hydroxybenzoesäure, Salicylsäure, Teilester von Polycarbonsäuren, wie z.B. Monoester von Bernsteinsäure , verzweigte aliphatische Carbonsäuren, wie 2,2-Dimethylpropansäure, 2,2-Dimethylpropansäure, 2,2- Dimethylbutansäure, 2-Ethylhexansäure. Ebenso ist es aber auch möglich, dass das organische oder anorganische Alkali- oder Erdalkalisalz einer starken Säure wie zum Beispiel Salzsäure eingesetzt wird.

Geeignete organische und anorganische Salze sind oder sind abgeleitet von Natriumhydrogencarbonat, Kaliumhydrogencarbonat, Lithiumhydrogencarbonat, Natriumcarbonat, Lithiumcarbonat, Kaliumcarbonat, Natriumacetat, Kaliumacetat, Lithiumacetat, Natriumstearat, Kaliumstearat, Lithiumstearat, Natriumoleat, Lithiumoleat, Kaliumoleat, Natriumbenzoat, Kaliumbenzoat, Lithiumbenzoat, Dinatrium-, Dikalium-, und Dilithiumsalze von BPA. Ferner können Calciumhydrogencarbonat, Bariumhydrogencarbonat, Magnesiumhydrogencarbonat, Strontiumhydrogencarbonat, Calciumcarbonat, Bariumcarbonat, Magnesiumcarbonat, Strontiumcarbonat, Calciumacetat, Bariumacetat, Magnesiumacetat, Strontiumacetat, Calciumstearat, Bariumstearat, Magnesiumstearat und entsprechende Oleate eingesetzt werden. Weiterhin können entsprechende Salze von Phenolen, insbesondere von Phenol eingesetzt werden. Diese Salze können einzeln oder im Gemisch eingesetzt werden.

Der zweite Katalysator ist bevorzugt ausgewählt aus der Gruppe bestehend aus Natriumhydroxid, Lithiumhydroxid, Natriumphenolat, Lithiumphenolat, Natriumbenzoat, Lithiumbenzoat, Lithiumchlorid, Lithiumacetylacetonatund Cäsiumcarbonat sowie Mischungen dieser Substanzen. Besonders bevorzugt werden Natriumphenolat, Lithiumphenolat, Natriumhydroxyd, Lithiumhydroxyid, Natriumbenzoat, Lithiumbenzoat, Lithiumchlorid und/oder Lithiumacetylcetonat eingesetzt. Lithiumchlorid wird bevorzugt als wässrige Lösung eingesetzt, beispielsweise in Form einer 15-%igen Lösung.

Es wurde festgestellt, dass das molare Verhältnis aller in Verfahrensschritt (i) anwesenden Dihydroxy-Verbindungen zu allen in Verfahrensschritt (i) anwesenden Dicarbonsäuren vor der Reaktion in Verfahrensschritt bevorzugt (i) 1:0,4 bis 1:0,005, weiter bevorzugt 1:0,3 bis 1:0,015 und ganz besonders bevorzugt 1:0,2 bis 1:0,05 beträgt.

Das erfindungsgemäße Verfahren ist dadurch gekennzeichnet, dass Kohlenstoffdioxid während des Verfahrens freigesetzt wird. Erfindungsgemäß wird in Verfahrensschritt (i) bevorzugt Kohlenstoffdioxid abgespalten (siehe Reaktionsschema oben). Diese Verfahrensweise erlaubt eine schnelle Reaktion unter geringer Temperaturbelastung.

Des Weiteren umfasst der erfindungsgemäße Verfahrensschritt (i) bevorzugt mindestens einen, besonders bevorzugt alle der folgenden Schritte (ia) bis (ic):

(ia) Aufschmelzen aller in Verfahrensschritt (i) anwesenden Komponenten, also mindestens der mindestens einen Dicarbonsäure der Formel (IVa), des mindestens einen Diarylcarbonats und zumindest der Komponenten (A) und (B) in Anwesenheit des mindestens einen Katalysators. Dies erfolgt bevorzugt unter Schutzgasatmosphäre, bevorzugt unter Stickstoff und/oder Argon. Bevorzugt erfolgt der Schritt (ia) in Abwesenheit eines Lösungsmittels. Der Begriff "Lösungsmittel" ist in diesem Zusammenhang dem Fachmann bekannt. Erfindungsgemäß wird unter dem Begriff "Lösungsmittel" bevorzugt eine Verbindung verstanden, die in keinem der Verfahrensschritte (i) und (ii) eine chemische Reaktion eingeht. Ausgenommen sind solche Verbindungen, welche durch die Reaktion entstehen (beispielsweise Phenol, wenn Diphenylcarbonat als das mindestens eine Diarylcarbonat eingesetzt wird). Selbstverständlich kann nicht ausgeschlossen werden, dass die Ausgangsverbindungen Spuren von Lösungsmitteln enthalten. Dieser Fall soll erfindungsgemäß bevorzugt umfasst sein. Jedoch wird erfindungsgemäß bevorzugt ein aktiver Schritt der Zugabe eines solchen Lösungsmittels vermieden.

(ib) Erhitzen des Gemisches, bevorzugt der aus Schritt (ia) erhaltenen Schmelze. Dabei können Schritt (ia) und Schritt (ib) auch überlappen, da zur Erzeugung einer Schmelze in Schritt (ia) ebenfalls ein Erhitzen notwendig sein kann. Das Erhitzen erfolgt bevorzugt zunächst auf 150 °C bis 180 °C.

(ic) Reaktion des Gemisches, bevorzugt des aus Schritt (ib) erhaltenen Gemisches unter Einbringung von Mischenergie, bevorzugt durch Rühren. Auch hier kann der Schritt (ic) mit dem Schritt (ib) überlappen, da durch das Erhitzen bereits die Reaktion des Gemisches initiiert werden kann. Bevorzugt ist die Schmelze dabei bereits durch Schritt (ib) unter Normaldruck auf Temperaturen zwischen 150 und 180 °C aufgeheizt. Je nach gewähltem Katalysator kann die Temperatur im Bereich 160 - 200 °C belassen werden. Alternativ wird die Temperatur in Schritt (ic) schrittweise - je nach beobachteter Reaktivität - auf 200°C - 300 °C, bevorzugt 210 - 260 °C, insbesondere bevorzugt 215 - 240 °C erhöht. Die Reaktivität kann über die Gasentwicklung auf dem Fachmann bekannte Weise abgeschätzt werden. Prinzipiell sind auch höhere Temperaturen in diesem Schritt möglich, jedoch kann es bei höheren Temperaturen zu Nebenreaktionen kommen (z.B. Verfärbungen). Daher sind höhere Temperaturen weniger bevorzugt. Man rührt solange unter Normaldruck, bis die Gasentwicklung im Wesentlichen stoppt. Erfindungsgemäß ist es möglich, dass unter diesen Bedingungen der durch die Reaktion der mindestens einen Carbonsäure mit dem mindestens einen Diarylcarbonat enstehende Arylalkohol (beispielsweise Phenol bei der Verwendung von Diphenylcarbonat) bereits teilweise mit entfernt wird.

Ebenso wurde erfindungsgemäß beobachtet, dass mindestens eine der Dihydroxyverbindung (A) und/oder (B) ebenfalls zu diesem Zeitpunkt schon Reaktionen eingegangen ist. So konnten Oligomere, umfassend Carbonateinheiten aus der Reaktion der mindestens einen der Dihydroxy-Verbindung (A) und/oder (B) mit dem mindestens einen Diarylcarbonat und/oder Estereinheiten aus der Reaktion der mindestens einen der Dihydroxy-Verbindung (A) und/oder (B) mit der mindestens einen Dicarbonsäure nachgewiesen werden.

Daher ist es erfindungsgemäß bevorzugt, dass das aus Verfahrensschritt (i) erhaltene Gemisches vor Durchführung des Verfahrensschritts (ii) Oligomere, umfassend Carbonateinheiten aus der Reaktion mindestens einer der Dihydroxy-Verbindung (Komponente (A) und/oder (B)) mit dem mindestens einen Diarylcarbonat und/oder Estereinheiten aus der Reaktion mindestens einer der Dihydroxy-Verbindung (Komponente (A) und/oder (B)), umfasst.

Die Reaktionszeit in Schritt (ic) hängt von der Menge der Einsatzstoffe ab. Bevorzugt liegt die Reaktionszeit des Schritts (ic) zwischen 0,5 h bis 24 h, bevorzugt zwischen 0,75 h und 5 h und insbesondere bevorzugt zwischen 1 h und 3 h. Dabei ist es bevorzugt, die Reaktionszeit so zu wählen, dass die Gasentwicklung im Wesentlichen nachgelassen hat (siehe Reaktionsschema oben).

Erfindungsgemäß ist es bevorzugt, dass das molare Verhältnis der Summe aller in Verfahrensschritt (i) anwesenden Dihydroxy-Verbindungen und aller in Verfahrensschritt (i) anwesenden Dicarbonsäuren zu allen in Verfahrensschritt (i) anwesenden Diarylcarbonaten vor der Reaktion in Verfahrensschritt (i) 1:0,4 bis 1:1,6 , bevorzugt 1:0,5 bis 1:1,5, weiterhin bevorzugt, 1:0,6 bis 1:1,4, besonders bevorzugt 1:0,7 bis 1:1,3, insbesondere bevorzugt 1:0,8, bis 1:1,2 und ganz besonders bevorzugt 1:0,9 bis 1: 1,1 beträgt. Der Fachmann ist in der Lage, entsprechende optimal geeignete Verhältnisse je nach Reinheit der Ausgangssubstanzen auszuwählen.

**Verfahrensschritt (ii)**

In Verfahrensschritt (ii) erfolgt die weitere Aufkondensation des aus Verfahrensschritt (i) erhaltenen Gemisches zumindest unter Entfernung der bei der Kondensation abgespaltenen chemischen Verbindung. Unter dem Ausdruck "weitere" Aufkondensation ist erfindungsgemäß zu verstehen, dass in Verfahrensschritt (i) zumindest teilweise bereits eine Kondensation stattgefunden hat. Dabei handelt es sich bevorzugt um die Reaktion der mindestens einen cycloaliphatischen Dicarbonsäure mit dem mindestens einen Diarylcarbonat unter Abspaltung eines Arylalkohols. Bevorzugt hat jedoch auch schon eine weitere Kondensation hin zu Oligomeren stattgefunden (siehe dazu Verfahrensschritt (i)).

Wenn im Verfahrensschritt (i) nur der erste Katalysator oder nur der zweite Katalysator eingesetzt wurde, so wird der im Verfahrensschritt (i) nicht eingesetzte Katalysator im Verfahrensschritt (ii) hinzugefügt.

Der Anteil der Alkalimetallkationen in Verfahrensschritt (ii) beträgt bevorzugt 0,0009 bis 0,0005 Gew.-% und besonders bevorzugt 0,0010 bis 0,0045 Gew.-%, jeweils bezogen auf alle im Verfahrensschritt (i) eingesetzten Komponenten.

In bevorzugter Ausführungsform sind der erste Katalysator und der zweite Katalysator in Verfahrensschritt (i) anwesend.

Es ist auch möglich, in Verfahrensschritt (i) eine Teilmenge des ersten Katalysators und / oder eine Teilmenge des zweiten Katalysators einzusetzen und dann den jeweiligen Rest in Verfahrensschritt (ii).

Bevorzugt wird aber in Verfahrensschritt (i) die Gesamtmenge des ersten und / oder des zweiten Katalysators eingesetzt. Am meisten bevorzugt wird in Verfahrensschritt (i) die Gesamtmenge beider Katalysatoren eingesetzt.

Der Begriff "Kondensation" ist dem Fachmann bekannt. Bevorzugt wird hierunter eine Reaktion verstanden, bei der sich zwei Moleküle (des gleichen Stoffes oder verschiedener Stoffe) zu einem größeren Molekül vereinigen, wobei ein Molekül einer chemisch einfachen Substanz abgespalten wird. Diese bei der Kondensation abgespaltene Verbindung wird in Verfahrensschritt (ii) entfernt. Dabei ist es bevorzugt, dass die bei der Kondensation abgespaltenen chemischen Verbindung in Verfahrensschritt (ii) mittels Vakuum entfernt wird. Demgemäß ist es bevorzugt, dass das

erfindungsgemäße Verfahren dadurch gekennzeichnet ist, dass während der Reaktion in Verfahrensschritt (i) die flüchtigen Bestandteile, welche einen Siedepunkt unterhalb des in Verfahrensschritt (i) gebildeten cycloaliphatischen Diesters, des Gemischs an Dihydroxy-Verbindung und unterhalb des mindestens einen Diarylcarbonats aufweisen, gegebenenfalls unter schrittweiser Reduzierung des Drucks abgetrennt werden. Eine schrittweise Abtrennung wird dabei bevorzugt gewählt, wenn unterschiedliche flüchtige Bestandteile abgetrennt werden. Ebenso bevorzugt wird eine schrittweise Abtrennung gewählt, um eine möglichst vollständige Abtrennung des oder der flüchtigen Bestandteils/e zu gewährleisten. Bei den flüchtigen Bestandteilen handelt es sich um die bei der Kondensation abgespaltenen chemischen Verbindung bzw. Verbindungen.

Eine schrittweise Absenkung des Drucks kann z.B. derart erfolgen, dass sobald die Kopftemperatur fällt der Druck gesenkt wird, um eine kontinuierliche Entfernung der bei der Kondensation abgespaltenen chemischen Verbindung zu gewährleisten. Wenn ein Druck von 1 mbar, bevorzugt < 1mbar erreicht ist, wird weiterhin kondensiert, bis die gewünschte Viskosität erreicht ist. Dies kann z.B. durch Drehmomentkontrolle erfolgen d.h. die Polykondensation wird bei Erreichen des gewünschten Drehmoments des Rührers abgebrochen.

Die Abtrennung des Kondensationsproduktes in Verfahrensschritt (ii) erfolgt bevorzugt bei Temperaturen von 200 °C bis 280 °C, besonders bevorzugt 210 °C bis 260 °C und insbesondere bevorzugt 220 °C bis 250 °C. Weiterhin bevorzugt beträgt das Vakuum bei der Abtrennung 500 mbar bis 0,01 mbar. Insbesondere ist es bevorzugt, dass die Abtrennung schrittweise durch Reduktion des Vakuums erfolgt. Ganz besonders bevorzugt beträgt das Vakuum in der letzten Stufe 10 mbar bis 0,01 mbar.

**[0090]** , Das erfindungsgemäße Polyestercarbonat kann als solches zu Formkörpern aller Art verarbeitet werden. Es kann auch mit anderen Thermoplasten und/oder Polymeradditiven zu thermoplastischen Formmassen verarbeitet werden. Die Formmassen und Formkörper sind weitere Gegenstände der vorliegenden Erfindung.

Die Polymeradditive werden bevorzugt aus der Gruppe bestehend aus Flammschutzmitteln, Antidrippingmitteln, Flammschutzsynergisten, Rauchinhibitoren, Gleit- und Entformungsmitteln, Nukleiermitteln, Antistatika, Leitfähigkeitsadditiven, Stabilisatoren (z.B. Hydrolyse-, Wärmealterungs- und UV-Stabilisatoren sowie Umesterungsinhibitoren), Fließfähigkeitspromotoren, Phasenverträglichkeitsvermittlern, Farbstoffen und Pigmenten, Schlagzähigkeitsmodifikatoren sowie Füll- und Verstärkungsstoffen.

Die thermoplastischen Formmassen können beispielsweise hergestellt werden, indem man das Polyestercarbonat und die weiteren Bestandteile in bekannter Weise vermischt und bei Temperaturen von bevorzugt 200°C bis 320°C, in üblichen Aggregaten wie beispielsweise Innenknetern, Extrudern und Doppelwellenschnecken schmelzcompoundiert und schmelzextrudiert. Dieser Prozess wird im Rahmen dieser Anmeldung allgemein als Compoundieren bezeichnet.

Unter Formmasse wird also das Produkt verstanden, das erhaltend wird, wenn die Bestandteile der Zusammensetzung schmelzcompoundiert und schmelzextrudiert werden.

Die Formkörper aus dem erfindungsgemäßen Polyestercarbonat oder den das Polyestercarbonat enthaltenden thermoplastischen Formmassen können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

**Beispiele**

Verwendete Materialien:

Diphenylcarbonat: Diphenylcarbonat, 99,5 %, CAS 102-09-0; Acros Organics, Geel, Belgien, abgekürzt als DPC

4-Dimethylaminopyridin: 4-(Dimethylaminopyridin; ≥98,0 %; purum; CAS 1122-58-3; Sigma-Aldrich, München Deutschland, abgekürzt als DMAP

Isosorbid: Isosorbid (CAS: 652-67-5), 99,8 %, Polysorb PS A; Roquette Freres (62136 Lestrem, Frankreich); abgekürzt als ISB

Lithiumhydroxid-monohydrat (CAS: 1310-66-3); >99,0 %; Sigma- Aldrich

1,4-Cyclohexandimethanol: CAS: 105-08-8, Aldrich 99% (abgekürzt als CHDM)

Adipinsäure: Sigma-Aldrich ; CAS:124-04-9 ; 99%

Terephthalsäure: Bernd Kraft; CAS: 100-21-0; Chargen Nr.: 19040245; "zur Synthese"

Furandicarbonsäure: aber; CAS: 3238-40-2; lot: 1427213

Analytische Methoden:

Lösungsviskosität

Bestimmung der Lösungsviskosität: Die relative Lösungsviskosität (ηrel; auch als eta rel bezeichnet) wurde in Dichlormethan bei einer Konzentration von 5 g/l bei 25 °C mit einem Ubbelohdeviskosimeter bestimmt. Die Bestimmung erfolgte nach DIN 51562-3; 1985-05. Dabei werden die Durchlaufzeiten des zu vermessenden Polyestercarbonats durch das Ubbelohde-Viskosimeter gemessen, um anschließend den Viskositätsunterschied zwischen Polymerlösung und seinem Lösungsmittel zu ermitteln. Dazu wird zunächst eine Kalibrierung des Ubbelohde-Viskosimeters mittels Vermessung der reinen Lösungsmittel Dichlormethan, Trichlorethylen und Tetrachlorethylen durchgeführt (dabei erfolgen immer mindestens 3 Messungen, höchstens 9 Messungen). Daraufhin erfolgt die eigentliche Kalibrierung mit dem Lösungsmittel Dichlormethan. Im Anschluss wird die Polymerprobe eingewogen, in Dichlormethan gelöst und für diese Lösung dann dreimal die Durchflusszeit bestimmt. Der Mittelwert der Durchflusszeiten wird über die Hagenbach-Korrektur korrigiert und die relative Lösungsviskosität errechnet.

Bestimmung der Glastemperatur

Die Glastemperatur wurde mittels dynamischer Differenzkalorimetrie (DSC) gemäß der Norm DIN EN ISO 11357-1:2009-10 und ISO 11357-2:2013-05 bei einer Heizrate von 10 K/min unter Stickstoff mit Bestimmung der Glastemperatur (Tg) gemessen als Wendepunkt im zweiten Aufheizvorgang bestimmt.

**Vergleichsbeispiel 1** (Versuch mit Terephthalsäure)

0,40 Mol Terephthalsäure, 0,14 Mol Cyclohexandimethanol und 0,27 Mol Isosorbid sowie 0,44 Mol Diphenylcarbonat, DMAP (4-Dimethylaminopyridin; 100 ppm bezogen auf die Einsatzstoffe Terephthalsäure, DPC und ISB) sowie eine wässrige Lösung von Lithiumhydroxid (100 g/l), entsprechend ca. 30 ppm Li, wurden in einem Kolben mit Kurzwegabscheider vorgelegt. Das Gemisch wurde durch 4-faches evakuieren und belüften mit Stickstoff von Sauerstoff befreit. Das Gemisch wurde aufgeschmolzen und bei Normaldruck auf 160 °C unter Rühren erwärmt. Das Gemisch wurde für 40 Minuten bei 160 °, für 60 Minuten bei 175 °C, für 30 Minuten bei 190 °C sowie für 10 Minuten bei 205 °C gerührt. Dabei entwickelt sich kontinuierlich Kohlenstoffdioxid. Nach Versiegen der $CO_2$ Entwicklung wurde die Badtemperatur auf 220 °C eingestellt. Nach weiteren 20 Minuten wurde Vakuum angelegt. Der Druck wurde innerhalb von 30 Minuten auf 10 mbar gesenkt. Dabei wurde kontinuierlich Phenol entfernt. Bei 10 mbar wurde ca. 10 Minuten gerührt. Dann wurde der Druck auf <1mbar (ca. 0,7 mbar) gesenkt und weitere 10 Minuten kondensiert. Danach wurde der Ansatz abgestellt.

Die weiteren Beispiele (Bsp.) wurden wie für Vergleichsbeispiel 1 angegeben durchgeführt. Abweichend von Vergleichsbeispiel 1 wurden zusätzlich die in Tabelle 1 jeweils angegebenen Säuren in den Kolben mit Kurzwegabscheider mit allen anderen das Polymer bildenden Monomeren sowie dem Katalysator (Abweichungen sind hier in der Tabelle angegeben) vorgelegt.

**Tabelle 1:**

| | Vgl. 1 | Bsp. 2 | Bsp. 3 | Bsp. 4 | Vgl. 2 |
|---|---|---|---|---|---|
| mol. Verhältnis CHDM/ISB/ COOH-R-COOH | 30/60/10 | 30/60/10 | 30/60/10 | 25/60/15 | 19/44/38 |
| Anteil COOH-R-COOH | 10 % | 10 % | 10 % | 15 % | 38 % |
| CHDM (mol) ca. | 0,14 | 0,14 | 0,14 | 0,113 | 0,0157 |
| DPC (mol) ca. | 0,44 | 0,44 | 0,44 | 0,44 | 0,0834 |
| Adipinsäure (mol) ca. | 0 | 0 | 0,02 | 0 | 0 |
| Terephthalsäure (mol) ca. | 0,04 | 0 | 0 | 0 | 0 |
| 2,5-Furandicarbonsäure (mol) ca. | 0 | 0,04 | 0,02 | 0,066 | 0,0313 |

(fortgesetzt)

| | Vgl. 1 | Bsp. 2 | Bsp. 3 | Bsp. 4 | Vgl. 2 |
|---|---|---|---|---|---|
| ISB (mol) ca. | 0,27 | 0,27 | 0,27 | 0,272 | 0,0372 |
| Katalysator | 100ppm DMAP, 30ppm Li (als LiOH) | 100ppm DMAP, 30ppm Li (als LiOH) | 100ppm DMAP, 30ppm Li (als LiOH) | 200ppm DMAP, 30ppm Na (als Benzoat ) | 200ppm DMAP, 30ppm Na (als Benzoat ) |
| Eta rel | 1,166 | 1,238 | 1,680 | 1,253 | * |
| Glasübergangstemperatur in °C | 120 | 124 | 119 | | |
| Anteil biobasierter Strukturmotive | 60 % | 70 % | 65% | 75 % | 82 % |
| Die mol-Angaben in der ersten Spalte der Tabelle 1 sind mit "ca." angegeben, da auf die zweite Nachkommastelle gerundet wurde. Es wurde das Verhältnis 2,04:1,00 (Diole zu Disäuren) zu Grunde gelegt.<br>* Vergleichsbeispiel 2: Es konnte keine Molekulargewichtserhöhung beobachtet werden. Die Furandicarbonsäure lag zum Ende des Verfahrensschritts (i) noch als Kristallbrei im Kolben vor. Es konnte auch keine nennenswerte Gasentwicklung beobachtet werden. | | | | | |

Die erfindungsgemäßen Beispiele 2, 3 und 4 zeigen, dass das erfinderische Verfahren die gewünschten Polyestercarbonate in hohen Viskositäten liefert. Dabei erkennt man, dass der Zusatz einer weiteren Säure, insbesondere einer biobasierten Säure, das Molekulargewicht deutlich ansteigen lässt im Verhältnis zu einem Beispiel, in dem keine weitere Säure anwesend ist (siehe Vergleich von Beispiel 2 und 3). Dabei konnte bei höheren Temperaturen eine besserer Vermischbarkeit beobachtet werden, so dass ein weiterer Molekulargewichtsaufbau stattfinden konnte. Ebenso wird ersichtlich, dass die gleiche Durchführung des Verfahrens mit der nicht biobasierten Terephthalsäure zu einem niedrigen Molekulargewichtsaufbau führt. Zudem zeigen die Versuche, dass der Gesamtanteil an Säure (bzw. entsprechenden Estergruppen im Polymer) zu Polyestercarbonaten führt, welche einen hohen Gesamtanteil an biobasierten Strukturmotiven aufweisen, und gleichzeitig gute mechanischen Eigenschaften, wie E-Modul und Bruchdehnung zeigen. Auch konnte bei einem erhöhten Anteil an Furandicarbonsäure (Vergleichsbeispiel 2) kein nennenswerter Molekulargewichtsaufbau erzielt werden. Dies bedeutet, dass nur mit dem erfindungsgemäßen Verfahren Polyestercarbonate mit den definierten Estergruppengehalten erzielt werden können.

## Patentansprüche

1. Polyestercarbonat, umfassend die Strukturformel (1)

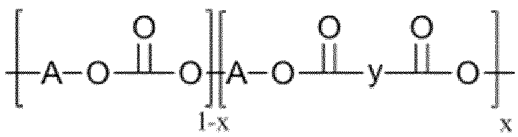

(1),

in der

A pro Wiederholungseinheit unabhängig voneinander zumindest entweder Struktureinheit (A) oder Struktureinheit (B) darstellt, wobei

(A) für die chemische Formel (2) steht

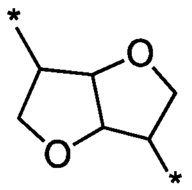

(2)

und

(B) für die chemische Formel (3) steht

*—x—* (3),

wobei x für eine Cycloalkylen-Gruppe mit 4 bis 20, bevorzugt 5 bis 15 Kohlenstoffatomen steht und wobei das Polyestercarbonat immer die Struktureinheiten (A) und (B) umfasst,

y jeweils unabhängig voneinander für die chemische Formel (IV) steht

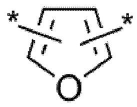

(IV),

und

$$0 < x < 1,$$

wobei die * jeweils die Position angeben, an der die chemischen Formeln ins Polyestercarbonat eingebunden sind, **dadurch gekennzeichnet, dass** das Polyestercarbonat zu 5 mol-% bis 30 mol-%, bevorzugt 7 mol-% bis 25 mol-%, besonders bevorzugt 9 mol-% bis 20 mol-% aus dem Strukturmotiv

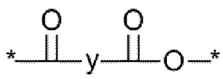

besteht, bezogen auf die gesamte Summe der folgenden Strukturmotive

*—x—O—* , 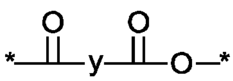 und 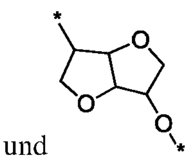.

**2.** Polyestercarbonat nach Anspruch 1, **dadurch gekennzeichnet, dass** das Polyestercarbonat

50 mol-% bis 75 mol-%, bevorzugt 53 mol-% bis 72 mol-%, insbesondere bevorzugt 57 mol-% bis 70 mol-% der Struktureinheit (A) und

25 mol-% bis 50 mol-%, bevorzugt 28 mol-% bis 47 mol %, insbesondere bevorzugt 30 mol-% bis 43 mol-% der Struktureinheit (B),

jeweils bezogen auf die Summe der Struktureinheiten (A) und (B), umfasst.

**3.** Polyestercarbonat nach einem der Ansprüche 1 oder 2, **dadurch gekennzeichnet, dass** das Polyestercarbonat zu mindestens 80 Gew.-%, bevorzugt 85 Gew.-%, besonders bevorzugt 90 Gew.-% aus der Strukturformel (1)

besteht, bezogen auf das Gesamtgewicht des Polyestercarbonats.

**4.** Polyestercarbonat nach einem der Ansprüche 1 bis 3, **dadurch gekennzeichnet, dass** das Polyestercarbonat zu 40 mol-% bis 70 mol-%, bevorzugt zu 45 mol-% bis 65 mol-%, besonders bevorzugt zu 50 mol-% bis 60 mol-% aus der chemischen Formel (2)

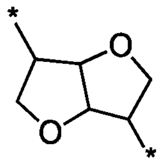 (2)

besteht, bezogen auf die gesamte Summe der folgenden Strukturmotive

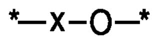 ,

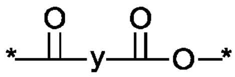 und 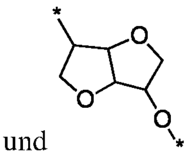 .

**5.** Polyestercarbonat nach einem der Ansprüche 1 bis 4, **dadurch gekennzeichnet, dass** das Polyestercarbonat die folgenden Wiederholungseinheiten (i) bis (iv) in beliebiger Reihenfolge umfasst

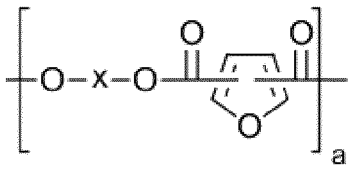

(i)

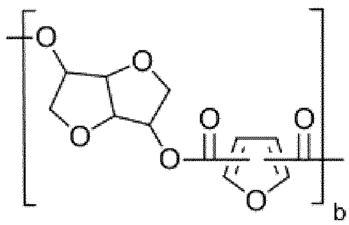

(ii)

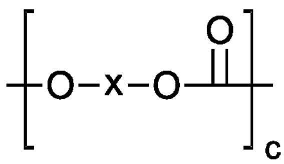 (iii)

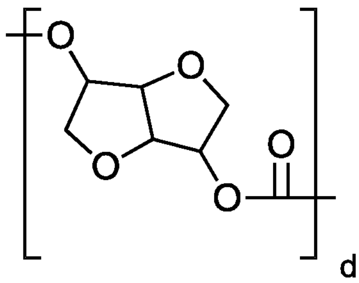

(iv)

in denen a, b, c und d jeweils unabhängig voneinander für eine natürliche Zahl stehen, welche jeweils die mittlere Anzahl an Wiederholungseinheiten angibt.

6. Polyestercarbonat nach einem der Ansprüche 1 bis 5, **dadurch gekennzeichnet, dass** das Polyestercarbonat zu 20 mol-% bis 40 mol-%, bevorzugt zu 22 mol-% bis 38 mol-%, besonders bevorzugt zu 25 mol-% bis 35 mol-% aus der chemischen Formel (3)

*—x—* (3),

besteht, , bezogen auf die gesamte Summe der folgenden Strukturmotive

*—x–O—*,

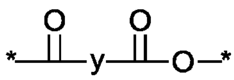 und 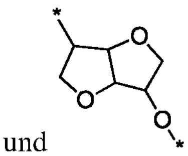.

7. Polyestercarbonat nach einem der Ansprüche 1 bis 6, **dadurch gekennzeichnet, dass** x in der chemischen Formel (3) für die Strukturformel (4) steht:

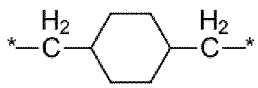

(4).

8. Polyestercarbonat nach einem der Ansprüche 1 bis 7, **dadurch gekennzeichnet, dass** y in der chemischen Formel (1) für die chemische Formel (5) steht:

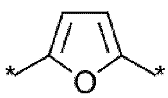

(5).

9. Verfahren zur Herstellung eines Polyestercarbonats nach einem der Ansprüche 1 bis 8 mittels Schmelzeumesterung, umfassend die Schritte

(i) Reaktion zumindest mindestens einer Dicarbonsäure der Formel (IVa)

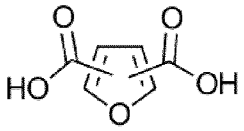

(IVa)

mit mindestens einem Diarylcarbonat unter Verwendung mindestens eines Katalysators und in Anwesenheit einer Mischung aus Dihydroxy-Verbindungen, umfassend (A) mindestens ein 1,4:3,6-Dianhydrohexitol und (B) mindestens eine weitere cycloaliphatische Dihydroxyverbindung, und

(ii) weitere Aufkondensation des aus Verfahrensschritt (i) erhaltenen Gemisches zumindest unter Entfernung der bei der Kondensation abgespaltenen chemischen Verbindung.

**10.** Verfahren zur Herstellung eines Polyestercarbonats nach Anspruch 9, **dadurch gekennzeichnet, dass** die Reaktion in Verfahrensschritt (i) in Anwesenheit mindestens eines ersten Katalysators und / oder eines zweiten Katalysators durchgeführt wird und die Aufkondensation in Verfahrensschritt (ii) mindestens in Anwesenheit des ersten Katalysators und des zweiten Katalysators durchgeführt wird, wobei der erste Katalysator mindestens eine tertiäre Stickstoffbase ist, der zweite Katalysator mindestens ein basisch wirkendes Alkalimetallsalz ist und wobei der Anteil der Alkalimetallkationen in Verfahrensschritt (ii) 0,0008 bis 0,0030 Gew.-%, bezogen auf alle im Verfahrensschritt (i) eingesetzten Komponenten, beträgt.

**11.** Verfahren zur Herstellung eines Polyestercarbonats nach einem der Ansprüche 9 oder 10, **dadurch gekennzeichnet, dass** das mindestens eine Diarylcarbonat ausgewählt wird aus der Gruppe, bestehend aus einer Verbindung der Formel (6)

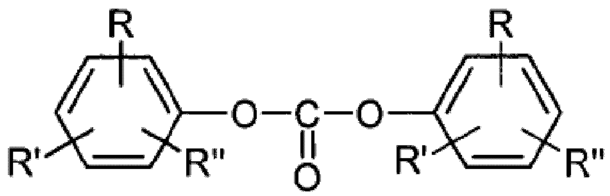

(6),

worin

R, R' und R" jeweils unabhängig voneinander gleich oder verschieden sein können und für Wasserstoff, gegebenenfalls verzweigtes C1-C34Alkyl, C7-C34-Alkylaryl, C6-C34-Aryl, eine Nitrogruppe, eine Carbonyl-enthaltende Gruppe, eine Carboxyl-enthaltende Gruppe oder eine Halogengruppe stehen.

**12.** Verfahren zur Herstellung eines Polyestercarbonats nach einem der Ansprüche 9 bis 11, **dadurch gekennzeichnet, dass** das mindestens eine Diarylcarbonat Diphenylcarbonat ist.

**13.** Verfahren zur Herstellung eines Polyestercarbonats nach einem der Ansprüche 9 bis 12, **dadurch gekennzeichnet, dass** der erste Katalysator ausgewählt ist aus der Gruppe bestehend aus ausgewählt ist aus der Gruppe bestehend aus von Guanidin abgeleiteten Basen, 4-Dimethylaminopyridin, 1,8-Diazabicyclo[5.4.0]undec-7-en (DBU), 1,5-Diazabicyclo[4.3.0]non-5-en (DBN), 1,5,7-Triazabicyclo[4.4.0]dec-5-en sowie Mischungen dieser Substanzen.

**14.** Formmasse enthaltend ein Polyestercarbonat nach einem der Ansprüche 1 bis 8.

**15.** Formkörper enthaltend ein Polyestercarbonat nach einem der Ansprüche 1 bis 8.

## Claims

**1.** Polyestercarbonate, comprising the structural formula (1)

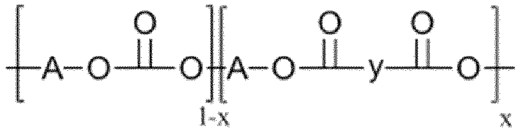

(1),

in which

A independently per repeating unit represents at least either structural unit (A) or structural unit (B), where

(A) represents chemical formula (2)

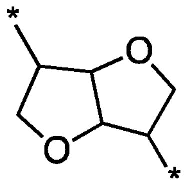

(2)

and
(B) represents chemical formula (3)

***—x—***   (3),

where x represents a cycloalkylene group having 4 to 20, preferably 5 to 15 carbon atoms and where the polyestercarbonate always comprises the structural units (A) and (B),
y each independently represents chemical formula (IV)

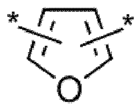

(IV),

and

$$0 < x < 1,$$

where the * in each case indicate the position at which the chemical formulae are incorporated into the polyestercarbonate, **characterized in that** the polyestercarbonate consists to an extent of 5 mol% to 30 mol%, preferably 7 mol% to 25 mol%, particularly preferably 9 mol% to 20 mol%, of the structural motif

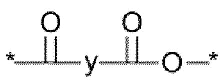

,

based on the total sum of the following structural motifs

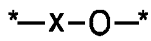, 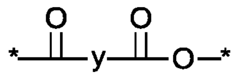

and

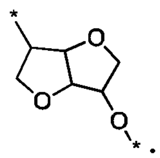

2. Polyestercarbonate according to Claim 1, **characterized in that** the polyestercarbonate comprises

50 mol% to 75 mol%, preferably 53 mol% to 72 mol%, especially preferably 57 mol% to 70 mol%, of structural unit (A) and
25 mol% to 50 mol%, preferably 28 mol% to 47 mol%, especially preferably 30 mol% to 43 mol%, of structural unit (B),
based in each case on the sum of structural units (A) and (B).

3. Polyestercarbonate according to either of Claims 1 and 2, **characterized in that** the polyestercarbonate consists of structural formula (1) to an extent of at least 80% by weight, preferably 85% by weight, particularly preferably 90% by weight, based on the total weight of the polyestercarbonate.

4. Polyestercarbonate according to any of Claims 1 to 3, **characterized in that** the polyestercarbonate consists to an extent of 40 mol% to 70 mol%, preferably 45 mol% to 65 mol%, particularly preferably 50 mol% to 60 mol%, of chemical formula (2)

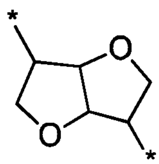 (2)

based on the total sum of the following structural motifs

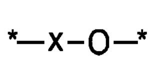, 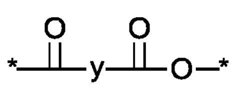 and 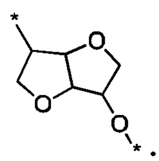

5. Polyestercarbonate according to any of Claims 1 to 4, **characterized in that** the polyestercarbonate comprises the following repeating units (i) to (iv) in any order

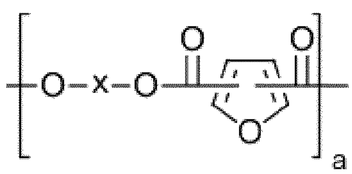

(i)

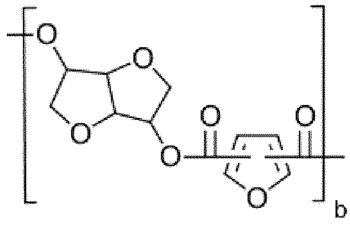

(ii)

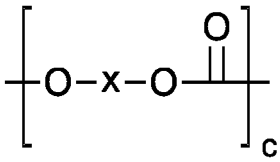

(iii)

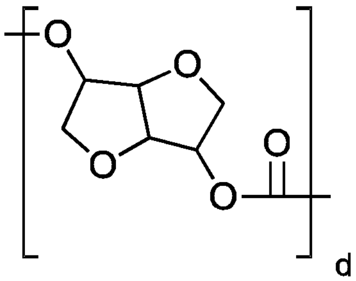

(iv)

in which a, b, c and d each independently represent a natural number which indicates the average number of repeating units in each case.

6. Polyestercarbonate according to any of Claims 1 to 5, **characterized in that** the polyestercarbonate consists to an extent of 20 mol% to 40 mol%, preferably 22 mol% to 38 mol%, particularly preferably 25 mol% to 35 mol%, of chemical formula (3)

*—x—* (3),

based on the total sum of the following structural motifs

*—x—O—* , 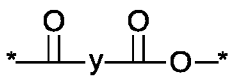 and 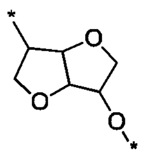.

7. Polyestercarbonate according to any of Claims 1 to 6, **characterized in that** x in chemical formula (3) represents structural formula (4) :

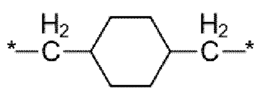

(4).

8. Polyestercarbonate according to any of Claims 1 to 7, **characterized in that** y in chemical formula (1) represents chemical formula (5):

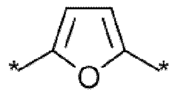

(5).

9. Process for preparing a polyestercarbonate according to any of Claims 1 to 8 by means of melt transesterification, comprising the steps of

(i) reaction at least of at least one dicarboxylic acid of formula (IVa)

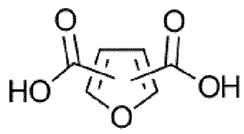

(IVa)

with at least one diaryl carbonate using at least one catalyst and in the presence of a mixture of dihydroxy compounds, comprising (A) at least one 1,4:3,6-dianhydrohexitol and (B) at least one further cycloaliphatic dihydroxy compound, and
(ii) further condensation of the mixture obtained from process step (i), at least with removal of the chemical compound eliminated in the condensation.

10. Process for preparing a polyestercarbonate according to Claim 9, **characterized in that** the reaction in process step (i) is conducted in the presence of at least a first catalyst and/or a second catalyst and the condensation in process step (ii) is conducted at least in the presence of the first catalyst and the second catalyst, wherein the first catalyst is at least one tertiary nitrogen base, the second catalyst is at least one basic alkali metal salt, and wherein the proportion of the alkali metal cations in process step (ii) is 0.0008% to 0.0030% by weight, based on all components used in process step (i).

11. Process for preparing a polyestercarbonate according to either of Claims 9 and 10, **characterized in that** the at least one diaryl carbonate is selected from the group consisting of a compound of formula (6)

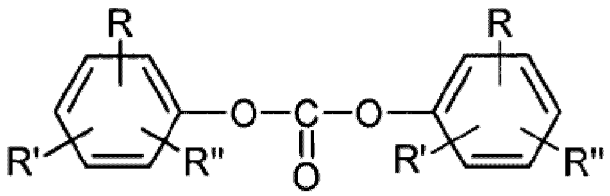

(6),

in which
R, R' and R" may each independently be identical or different and represent hydrogen, optionally branched C1-C34 alkyl, C7-C34 alkylaryl, C6-C34 aryl, a nitro group, a carbonyl-containing group, a carboxyl-containing group or a halogen group.

12. Process for preparing a polyestercarbonate according to any of Claims 9 to 11, **characterized in that** the at least one diaryl carbonate is diphenyl carbonate.

13. Process for preparing a polyestercarbonate according to any of Claims 9 to 12, **characterized in that** the first catalyst is selected from the group consisting of guanidine-derived bases, 4-dimethylaminopyridine, 1,8-diazabicyclo[5.4.0]undec-7-ene (DBU), 1,5-diazabicyclo[4.3.0]non-5-ene (DBN), 1,5,7-triazabicyclo[4.4.0]dec-5-ene, and mixtures of these substances.

14. Molding compound comprising a polyestercarbonate according to any of Claims 1 to 8.

15. Molded article comprising a polyestercarbonate according to any of Claims 1 to 8.

**Revendications**

**1.** Polyestercarbonate, comportant la formule structurale (1)

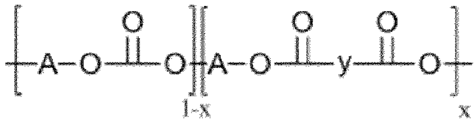

(1),

dans laquelle

A représente chaque fois indépendamment par unité répétitive au moins soit l'unité structurale (A), soit l'unité structurale (B),

(A) représentant la formule chimique (2)

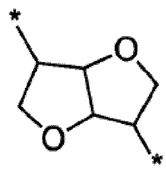

(2)

et
(B) représentant la formule chimique (3)

$*—x—*$

(3),

où x représente un groupe cycloalkylène ayant de 4 à 20, de préférence 5 à 15 atomes de carbone et le polyestercarbonate comprenant toujours les unités structurales (A) et (B),
y représente chaque fois indépendamment la formule chimique (IV) suivante

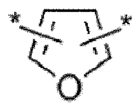

(IV),

et

$$0 < x < 1,$$

les astérisques * indiquant chaque fois la position à laquelle les formules chimiques sont liées dans le polyestercarbonate, **caractérisé en ce que** le polyestercarbonate est constitué à raison de 5 % en moles à 30 % en moles, de préférence 7 % en moles à 25 % en moles, de façon particulièrement préférée 9 % en moles à 20 % en moles du motif structural

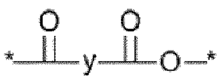

,

par rapport à la somme totale des motifs structuraux suivants

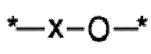, 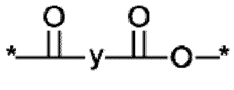 et 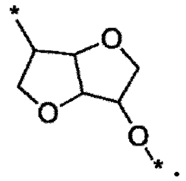.

2. Polyestercarbonate selon la revendication 1, **caractérisé en ce que** le polyestercarbonate comprend

50 % en moles à 75 % en moles, de préférence 53 % en moles à 72 % en moles, de façon particulièrement préférée 57 % en moles à 70 % en moles de l’unité structurale (A), et
25 % en moles à 50 % en moles, de préférence 28 % en moles à 47 % en moles, de façon particulièrement préférée 30 % en moles à 43 % en moles de l’unité structurale (B),
chaque fois par rapport à la somme des unités structurales (A) et (B).

3. Polyestercarbonate selon l’une quelconque des revendications 1 et 2, **caractérisé en ce que** le polyestercarbonate consiste à raison d’au moins 80 % en poids, de préférence 85% en poids, de façon particulièrement préférée 90 % en poids en la formule structurale (1), par rapport au poids total du polyestercarbonate.

4. Polyestercarbonate selon l’une quelconque des revendications 1 à 3, **caractérisé en ce que** le polyestercarbonate est constitué à raison de 40 % en moles à 70 % en moles, de préférence à raison de 45 % en moles à 65 % en moles, de façon particulièrement préférée à raison de 50 % en moles à 60 % en moles en la formule chimique (2)

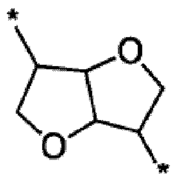 (2),

par rapport à la somme totale des motifs structuraux suivants

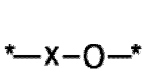, 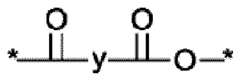 et 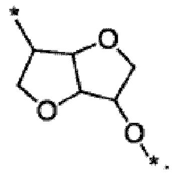.

5. Polyestercarbonate selon l’une quelconque des revendications 1 à 4, **caractérisé en ce que** le polyestercarbonate comprend les unités répétitives (i) à (iv) suivantes en un ordre quelconque

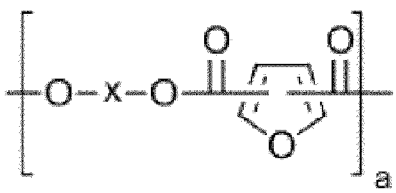

(i)

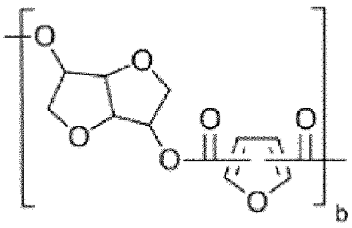

(ii)

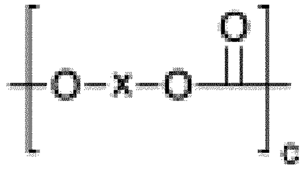

(iii)

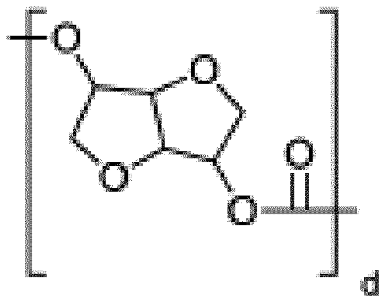

(iv)

dans lesquelles a, b, c et d représentent chacun indépendamment les uns des autres un nombre naturel qui indique chaque fois le nombre moyen d'unités répétitives.

**6.** Polyestercarbonate selon l'une quelconque des revendications 1 à 5, **caractérisé en ce que** le polyestercarbonate est constitué à raison de 20 % en moles à 40 % en moles, de préférence à raison de 22 % en moles à 38 % en moles, de façon particulièrement préférée à raison de 25 % en moles à 35 % en moles de la formule chimique (3)

*—X—* (3),

par rapport à la somme totale des motifs structuraux suivants

*—X—O—*, 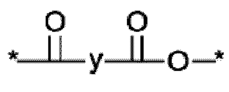 et 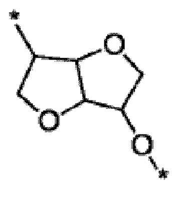.

**7.** Polyestercarbonate selon l'une quelconque des revendications 1 à 6, **caractérisé en ce que** X dans la formule chimique (3) représente la formule structurale (4) :

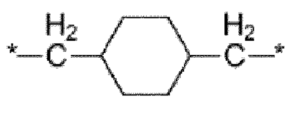

(4).

**8.** Polyestercarbonate selon l'une quelconque des revendications 1 à 7, **caractérisé en ce que** y dans la formule chimique (1) représente la formule chimique (5) :

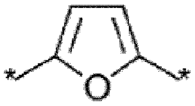

(5).

9. Procédé pour la préparation d'un polyestercarbonate selon l'une quelconque des revendications 1 à 8 par transestérification en masse fondue, comprenant les étapes

(i) réaction d'au minimum au moins un acide dicarboxylique de formule (IVa)

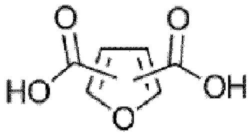

(IVa)

avec au moins un carbonate de diaryle avec utilisation d'au moins un catalyseur et en présence d'un mélange de composés dihydroxylés, comprenant (A) au moins un 1,4:3,6-dianhydrohexitol et (B) au moins un autre composé dihydroxylé cycloaliphatique, et
(ii) condensation plus poussée du mélange obtenu dans l'étape (i) du procédé, au moins avec élimination du composé chimique séparé lors de la condensation.

10. Procédé pour la préparation d'un polyestercarbonate selon la revendication 9, **caractérisé en ce que** la réaction dans l'étape (i) du procédé est effectuée en présence d'au moins un premier catalyseur et/ou un deuxième catalyseur et la condensation dans l'étape (ii) du procédé est effectuée au moins en présence du premier catalyseur et du deuxième catalyseur, le premier catalyseur étant au moins une base azotée tertiaire, le deuxième catalyseur étant au moins un sel de métal alcalin à action basique et la proportion des cations de métaux alcalins dans l'étape (ii) du procédé valant 0,0008 à 0,0030 % en poids, par rapport à l'ensemble des composants utilisés dans l'étape (i) du procédé.

11. Procédé pour la préparation d'un polyestercarbonate selon l'une quelconque des revendications 9 et 10, **caractérisé en ce que** ledit au moins un carbonate de diaryle est choisi dans le groupe constitué par un composé de formule (6)

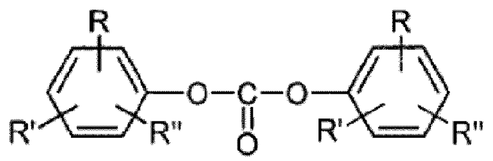

(6),

dans laquelle
R, R' et R" chaque fois indépendamment les uns des autres peuvent être identiques ou différents et représentent un atome d'hydrogène, un groupe alkyle en $C_1$-$C_{34}$, alkylaryle en $C_7$-$C_{34}$, aryle en $C_6$-$C_{34}$, éventuellement ramifié, un groupe nitro, un groupe contenant carbonyle, un groupe contenant carboxy ou un groupe halogène.

12. Procédé pour la préparation d'un polyestercarbonate selon l'une quelconque des revendications 9 à 11, **caractérisé en ce que** ledit au moins un carbonate de diaryle est le carbonate de diphényle.

13. Procédé pour la préparation d'un polyestercarbonate selon l'une quelconque des revendications 9 à 12, **caractérisé en ce que** le premier catalyseur est choisi dans le groupe constitué par les bases dérivées de guanidine, la 4-diméthylaminopyridine, le 1,8-diaza-bicyclo[5.4.0]undéc-7-ène (DBU), le 1,5-diaza-bicyclo[4.3.0]non-5-ène (DBN), le 1,5,7-triaza-bicyclo[4.4.0]déc-5-ène ainsi que des mélanges de ces substances.

14. Matière à mouler contenant un polyestercarbonate selon l'une quelconque des revendications 1 à 8.

15. Corps moulé contenant un polyestercarbonate selon l'une quelconque des revendications 1 à 8.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 3026074 A1
- EP 3248999 A1
- US 2019375890 A1
- CN 110183633 A
- US 20190375890 A1
- WO 2020085686 A1
- WO 0132742 A1
- EP 2019084847 W
- JP 2010077398 A

### In der Beschreibung aufgeführte Nicht-Patentliteratur

- **TERZOPOULOU et al.** *Materials,* 2017, vol. 10, 801
- **WANG et al.** *European Polymer Journal,* 2018, vol. 109, 379-390
- **LIU et al.** *ACS Sustainable Chem. Eng.,* 2019, vol. 7, 6401-6411
- **S. A. PARK et al.** *Polymer,* 2017, vol. 116 (153 - 159), 155, , 156
- *CHEMICAL ABSTRACTS,* 102-09-0
- *CHEMICAL ABSTRACTS,* 1122-58-3
- *CHEMICAL ABSTRACTS,* 652-67-5
- *CHEMICAL ABSTRACTS,* 1310-66-3
- *CHEMICAL ABSTRACTS,* 105-08-8
- *CHEMICAL ABSTRACTS,* 124-04-9
- *CHEMICAL ABSTRACTS,* 100-21-0
- *CHEMICAL ABSTRACTS,* 3238-40-2